# EUROPEAN PATENT APPLICATION

(11) **EP 4 775 069 A2**
(43) Date of publication of application: **15.07.2026**
(21) Application number: 26151489.7
(22) Date of filing: 13.01.2026
(51) Int. Cl.: A42B 3/04, G02B 27/01

(54) **SYSTEMS FOR HEADGEAR**

(30) Priority: 14.01.2025 US 202563745003 P; 29.12.2025 US 202563949850 P
(71) Applicant: Galvion Ltd., Portsmouth, NH 03801 (US)
(72) Inventor: HENNICK, Adam, Montreal (CA); DESJARDINS, Nicolas, Pincourt (CA); HOULE, Francois, Montreal (CA); PERRAS, David, Ottawa (CA)
(74) Representative: Abel & Imray LLP

(57) **Abstract**

A helmet system (103, 104, 106) that includes a flexible member assembly (2500, 2501, 2503, 2505) removably attachable to the helmet system is disclosed, for example to a mount (140, 2700, 4100, 4101, 4102, 4103) disposed on an outer surface (117) of a helmet shell (105, 205). The flexible member assembly includes a coupling member (2520, 2540, 2560) attached to an end of a flexible member (2510, 2512). The mount includes an interface (2220, 2230, 2260, 2261) having an assembly portion (2222) for receiving the coupling member and a lock portion (2226, 2236, 2266, 3514) for securing the coupling member. In some implementations, the coupling member may be secured with tactile feedback, seated by tension applied to the flexible member, and/or is flush with an outer surface of the mount when secured. The helmet system may further include a visor mount and a visor assembly configured for adjustable positioning along a rail. A flexible member assembly independently attachable to an object (150, 2800, 4200) associated with a helmet system is also disclosed.

## Description

### 1 Cross-Reference To Related Applications

This application claims the benefit of priority of U.S. Provisional Application No. 63/745,003 filed on January 14, 2025, the disclosure of which is incorporated herein by reference in its entirety and the benefit of priority of U.S. Provisional Application No. 63/949,850 filed on December 29, 2025, the disclosure of which is incorporated herein by reference in its entirety.

### 2 Copyright Notice

A portion of the disclosure of this patent document may contain material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever. The following notice shall apply to this document: Copyright ^{©} 2024 - 2025, Galvion, Inc.

### 3 Background of the Invention

### 3.1 Field of the Invention

The exemplary, illustrative, technology herein relates to systems and methods for attaching objects to headgear.

### 3.2 The Related Art

The technology herein has applications in the areas of systems for headgear, including for helmets worn by a warfighter. The technology is, at least in part, related to systems for attaching objects to headgear including objects for face and eye protection and objects that include electronics and optoelectronics, for example night vision or other vision systems, and systems for managing cables attached to the headgear.

### 4 Summary of the Invention

In some aspects, a helmet system may include a helmet shell, a mount for attaching an object to the helmet system, the mount disposed on an outer surface of the helmet shell, and a flexible member assembly removably attachable to the mount. The flexible member assembly includes a flexible member, and a coupling member attached to a first end of the flexible member for attaching the flexible member assembly to the mount. The mount may include an interface for removably attaching the flexible member to the rail. The interface may include an assembly portion for receiving the coupling member and for removing the rail interface member from the interface, and a lock portion for securing the rail interface member to the rail.

In a further aspect, the coupling member may be removable from the mount while disposed in the assembly portion and secured to the rail while disposed in the lock portion. Releasably attaching the flexible member assembly to the mount may include translating the coupling member from the assembly portion to the lock portion, and removing the coupling member from the mount may include translating the coupling member from the lock portion to the assembly portion.

In a further aspect, the flexible member assembly may include a second coupling member attached to a second end of the flexible member and the mount may comprise a second interface for removably attaching the second coupling member to the mount.

In a further aspect, the coupling member may include a snap lock feature for attaching the coupling member to the lock portion with tactile feedback.

In a further aspect, a top surface of the coupling member may be flush with an outer surface of the mount when the coupling member is disposed in the lock portion.

In a further aspect, tension applied to the flexible member may seat the coupling member in the lock portion.

In a further aspect, the mount may include a shroud for attaching the object to the helmet shell and the flexible member assembly may be connectable to the object for supporting the object.

In a further aspect, the mount may include a rail for attaching a first object to the helmet system and the helmet system may further include an adapter disposed over a portion of the rail. The adapter may include an interface for attaching a second object to the helmet system. The second object may include a hook for rotatably engaging with the interface and a lock for reliably coupling the second object to the adapter. The second object may be removable from the helmet system by operating an actuator to release the lock. In a further aspect, the second object may be removable from the helmet system by applying a force greater than a threshold amount to pull the object from the helmet system.

In a further aspect, the helmet system may include a visor mount attachable to the helmet shell. The visor mount may include a rail configured to be disposed beneath a front rim of the helmet shell when the visor mount is attached to the helmet shell. The helmet system may include a visor assembly that is attachable to the visor mount. The visor assembly may include an engagement body for releasably fixing the visor assembly to the rail. The rail may include a locating interface formed on a bottom surface of the rail, the locating interface including one or more locating tooth receptacles. The engagement body may include one or more locating teeth for engaging with the one or more locating tooth receptacles to fix the engagement body in a position along the rail and for disengaging from the one or more locating tooth receptacles to enable sliding of the engagement body along the rail.

In some aspects, a flexible member assembly may be provided. The flexible member assembly may be attachable to an object that is part of a helmet system. The flexible member assembly may include a flexible member and a coupling member attached to first end of the flexile member for releasably attaching the flexible member assembly to the object. The coupling member may be configured to be releasably coupled to an interface disposed on the object. The interface may include an assembly portion for receiving the coupling member and for removing the coupling member from the interface and a lock portion of securing the coupling member to the object.

In further aspects, the object may include a mount for attaching a second object to a helmet shell. The object may include eyewear. The object may include a helmet shell. The second end of the flexible member may be attached to an eye protection device.

In some aspects, a helmet system includes a shroud for attaching one or more objects to the helmet system. The shroud includes a flexible member assembly interface for removably attaching a flexible member assembly to the shroud. The flexible member assembly includes a flexible member and an interface member attached to a first end of the flexible member. The flexible member interface includes an assembly portion for receiving the rail interface member and for removing the rail interface member from the interface, a lock portion for securing the rail interface member to the rail, a transition portion for translating the rail interface member from the assembly portion into the lock portion.

In some aspects, a cable management system for a helmet includes a cable clip. The cable clip may include a cable channel portion for holding a portion of a cable and a lock portion for attaching the cable clip to a mount attached to the helmet. The mount may include a first opening for receiving the lock portion, an interface surface for retaining the lock portion within the first opening, and a second opening to enable a user to release the lock portion from the interface surface to remove the cable clip from the mount.

In a further aspect, the mount may include a plurality of flexible fastener openings passing through a wall of the rail, each flexible fastener opening for receiving a flexible fastener for supporting a portion of the cable.

In some aspects, a task light assembly for headgear includes a task light mount attachable to the headgear and a task light removably attachable to the task light mount. The task light includes a foot for interfacing with the task light mount. The task light mount includes a housing having an outer wall, an assembly opening passing through the outer wall, the assembly opening for receiving the foot and passing the foot into an interior of the housing, a groove passing through the outer wall, the groove connected to a one of the plurality of assembly openings, the groove for retaining the foot in the interior of the housing, and a lock plate comprising a lock protrusion, the lock protrusion for blocking the assembly opening to retain the foot in the groove when the lock plate is in a locked configuration, wherein the task light is locked onto the task light mount when the foot is disposed within the groove.

In some aspects a helmet system includes a helmet shell and a mandible assembly. The mandible assembly may include a mandible guard and an arm attached to the mandible guard. The arm may include an adapter interface for removably attaching the arm to the helmet shell. An adapter may be coupled to an outer surface of the helmet shell. The adapter may include a mandible interface for coupling with the first adapter interface. The adapter interface may include a hook portion and a lock portion. The lock portion may have a locked configuration and an unlocked configuration. The mandible interface may include a receptacle for rotatably receiving the hook portion and a lock receptacle for receiving the lock portion.

In further aspects, the adapter interface may include an attachment lock. The attachment lock may include the lock portion, a release actuator, and a compliant member. The attachment lock may have a locked configuration wherein the lock portion is engaged with the lock receptacle and an unlocked configuration wherein the lock is disengaged from the lock receptacle. The compliant member may be configured and disposed to provide an urging force to urge the attachment lock into the locked configuration. The release actuator may be configured to be operated to overcome the urging force to transition the attachment lock into the unlocked configuration to enable removable of the mandible assembly.

In further aspects, the mandible assembly may be removable from the helmet system when a force greater than a threshold amount is applied to the mandible guard.

In some aspects, a mandible guard assembly may be removably attachable to a helmet system. The helmet system may be wearable on the head of user. The mandible guard assembly may include a mandible guard for protecting a portion of the user's face and an arm coupled to the mandible guard for attaching the mandible guard assembly to the helmet system, The mandible guard assembly may include a drop down system having a locked configuration and a drop down configuration. The locked configuration is for holding the mandible guard in front of the portion of the user's face and the drop down configuration is for moving the mandible guard away from the user's face. The drop down system may include a groove with a lock portion and a drop down portion, a drop down actuator with a protrusion for interfacing with the groove and for traveling within the groove, and a compliant member for urging the protrusion into the lock portion of the groove. The drop down system may be in the locked configuration when the protrusion is disposed in the lock portion of the groove. The drop down system may be = in the drop down configuration when the protrusion is disposed in the drop down portion of the groove. The drop down actuator may be operable to move the protrusion from the lock portion of the groove and into the drop down portion of the groove.

In an embodiment, a mandible guard assembly includes a mandible guard, an arm for attaching the mandible guard assembly to headgear, and a mandible interface for attaching the mandible guard to the mandible arm. The arm includes a core member formed from a metal and a molded portion formed over the core member. The molded portion includes a polymer material and has a bottom surface. The core member includes a mandible guard attachment portion extending from the bottom surface of the molded portion. The mandible guard attachment portion is for attaching the mandible interface to the arm. The mandible interface includes a top surface and a drop down actuator. The drop down actuator is for transitioning the mandible interface between a first configuration wherein the top surface of the mandible interface is disposed substantially parallel to the bottom surface of the molded portion and a second configuration wherein the top surface of the mandible interface is disposed with an opening angle between the top surface of the mandible interface and the bottom surface of the molded portion of 5 degrees or greater.

In some embodiments, the opening angle is between 5 degrees and thirty five degrees.

In some embodiments, the opening angle is greater than 30 degrees.

In some aspects, a visor assembly is for a helmet system that includes a helmet shell. The visor assembly may include a visor mount configured to be disposed over a lower rim of the helmet shell on a front portion of the helmet shell and a visor assembly that is removably attachable to the visor mount. The visor assembly may include an engagement body and a visor. The visor is attached to the engagement body. The visor mount may include a visor rail having one or more locating tooth receptacles. The engagement body may include a slide on interface for slidably mounting the engagement body on the visor rail and for positioning the visor assembly at a selectable position along the visor rail. The slide on interface may include one or more locating teeth for engaging with the one or more locating tooth receptacles to fixing the visor assembly at the selectable position.

In a further aspect, the engagement body may also include an urging member and an actuator body. The actuator body may include one or more of the one or more locating teeth and an engagement actuator. The actuator body may have an engaged configuration in which at least one of the one or more locating teeth are engaged with a corresponding locating tooth receptacle. The actuator body may have a disengaged configuration in which the one or more locating teeth are each disengaged from the one or more locating tooth receptacles. The urging member may be configured and disposed to provide an urging force to maintain the actuator body in the engaged configuration.

In a further aspect, the engagement actuator is operable to transition the actuator body from the engaged configuration to the disengaged configuration, thereby enabling translation of the visor assembly relative to the visor rail and removal of the visor assembly from the visor mount.

In a further aspect, the engagement body further includes a visor lock for preventing operation of the engagement actuator to transition the actuator body from the engaged configuration to the disengaged configuration. In a further aspect, the engagement body includes a visor lock actuator operable by a user to engage the visor lock to prevent operation of the engagement actuator and to disengage the visor lock to enable operation of the engagement actuator.

In a further aspect, the engagement body includes a first actuator body with a first engagement actuator and a second actuator body with a second engagement actuator. Both the first and second engagement actuators must be in the disengaged configuration to enable translation of the visor assembly relative to the visor mount.

In some aspects, a visor system is for attaching a visor to a helmet shell. The helmet shell may have an outer surface, and inner surface, and a lower rim disposed between the inner surface and the outer surface. The visor system may include a visor mount attachable to the helmet shell. The visor mount may include a first portion configured to be disposed on the outer surface of the helmet shell, a second portion configured to be disposed in contact with the inner surface of the helmet shell, a third portion formed between an connecting the first portion and the second portion. The third portion may be configured to span the rim of the helmet shell. The visor mount may include a visor rail for attaching a visor assembly to the visor mount. The visor rail may be disposed on the third portion and configured to be disposed beneath the lower rim when the visor mount is attached to the helmet shell.

In a further aspect, the first portion is configured to interface with a shroud disposed on the outer surface of the helmet shell to at least partially secure the visor mount to the helmet shell.

In a further aspect, the first portion includes a holding fastener to at least partially secure the visor mount to the helmet shell.

In a further aspect, the second portion includes an interface for securing the second portion in contact with the inner surface of the helmet shell. In some embodiments, the interface includes a fastener opening for securing the second portion with a fastener. In some embodiments, the second portion is configured to be disposed between the inner surface of the helmet shell and a liner portion of the helmet shell.

In a further aspect, the visor mount may include an electrical interface for electrically connecting with an electrical interface of the shroud to provide one or more of power and data signals to an accessory device connectable to the visor mount.

The above and other features of the technology including various novel details of construction and combinations of parts, and other advantages, will now be more particularly described with reference to the accompanying drawings and pointed out in the claims. It will be understood that the particular method and device embodying the technology disclosed herein are shown by way of illustration and not as a limitation of the invention. The principles and features of this invention may be employed in various and numerous embodiments without departing from the scope of the invention.

### 5 Brief Description of the Drawings

In the accompanying drawings, reference characters refer to the same parts throughout the different views. The drawings are not necessarily to scale; emphasis has instead been placed upon illustrating the principles of the invention. The features of the present invention will best be understood from a detailed description of the invention and example embodiments thereof selected for the purposes of illustration and shown in the accompanying drawings in which:
Fig. 1 shows a perspective view of a helmet system according to the technology disclosed herein;
Fig. 2 shows a side view of a rail assembly including a helmet rail, removable flexible member, cable clip, and removable flexible member of the helmet system shown in Fig. 1;
Fig. 3A shows a front exploded perspective view of the rail assembly shown in Fig. 2;
Fig. 3B shows a rear exploded perspective view of the rail assembly shown in Fig. 2;
Fig. 4 shows a rear perspective view of a rear compute module (RCM) assembly of the helmet system shown in Fig. 1;
Fig. 5 shows a rear perspective view of the helmet system shown in Fig. 1, including the RCM assembly shown in Fig. 4 attached to an embodiment of the rail shown in Fig. 2;
Fig. 6 shows a rear detail view of the rail shown in Fig. 5;
Fig. 7 shows a detail cross-sectional view of the rail assembly shown in Fig. 5 taken through line 7-7 of Fig. 5;
Fig. 8 shows a detail view of the rail shown in Fig. 6, including alternative rail clip components;
Fig. 9 shows plan view of the rail assembly shown in Fig. 1 including a first embodiment of a flexible member attachment interface;
Fig. 10A shows a detail plan view of the flexible member attachment interface shown in Fig. 9 with a first embodiment of a flexible member assembly;
Fig. 10B shows a detail plan view of the flexible member attachment interface shown in Fig. 9 with a first embodiment of a flexible member assembly;
Fig. 11A shows a detail perspective view of a second embodiment of a flexible member attachment interface with a second embodiment of a flexible member assembly;
Fig. 11B shows a detail perspective view of the second embodiment of a flexible member attachment interface with the second embodiment of a flexible member assembly shown in Fig. 11A;
Fig. 11C shows a detail perspective view of the second embodiment of a flexible member attachment interface with the second embodiment of a flexible member assembly shown in Fig. 11A;
Fig. 12 shows a detail plan view of a third embodiment of a flexible member attachment interface with a third embodiment of a flexible member assembly;
Fig. 13 shows a detail perspective view of the third embodiment of a flexible member assembly shown in Fig. 12 assembled into the third embodiment of the flexible member attachment interface shown in Fig. 12;
Fig. 14A shows a detail section view of the third embodiment of a flexible member assembly shown in Fig. 12 disassembled from the third embodiment of the flexible member attachment interface shown in Fig. 12;
Fig. 14B shows a detail section view of the third embodiment of a flexible member assembly shown in Fig. 12 partially assembly into the third embodiment of the flexible member attachment interface shown in Fig. 12;

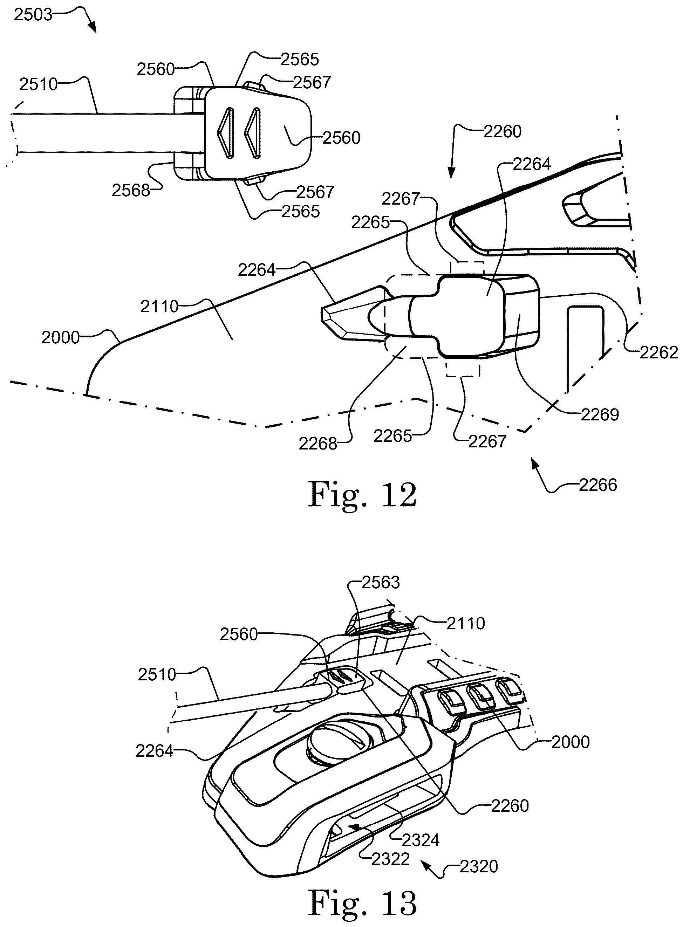

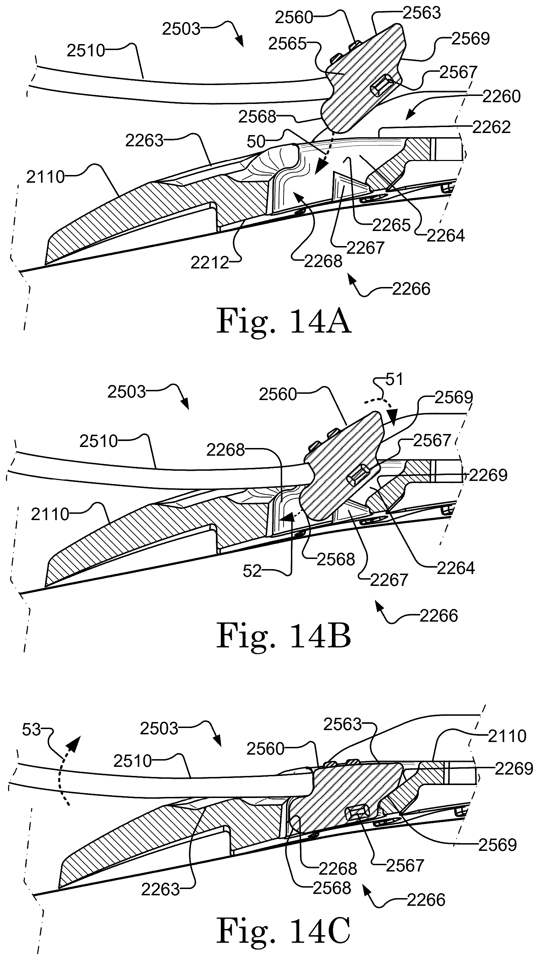

Fig. 14B shows a detail section view of the third embodiment of a flexible member assembly shown in Fig. 12 disposed within the third embodiment of the flexible member attachment interface shown in Fig. 12;

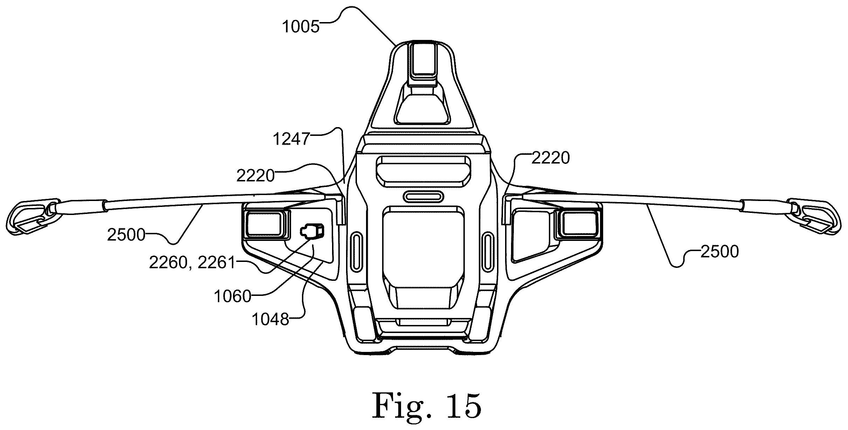

Fig. 15 shows a plan view of an example embodiment of a shroud including flexible member assembly attachment interfaces and removable flexible members assembled onto the flexible member attachment interfaces;

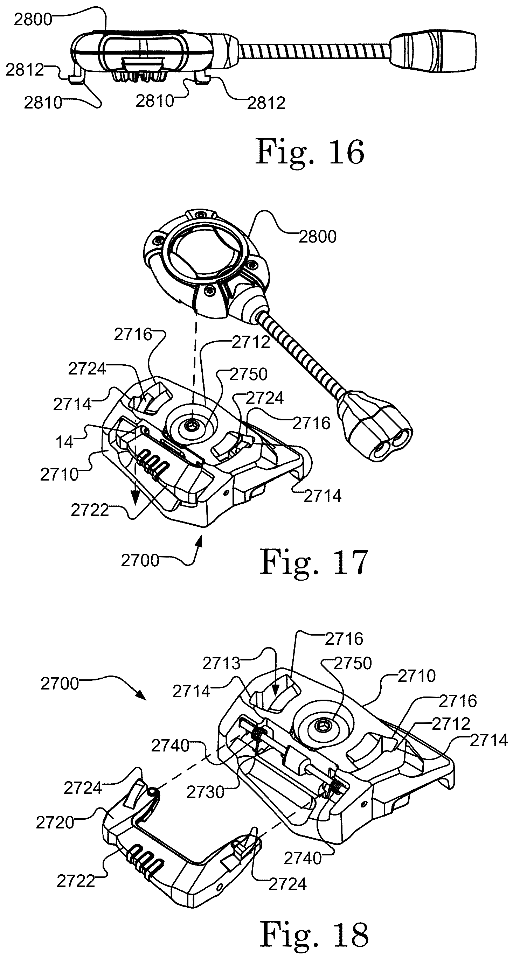

Fig. 16 shows a side perspective view of a task light;
Fig. 17 shows a top perspective view of a task light mount and the task light shown in Fig. 16;
Fig. 18 shows an exploded view of the task light mount shown in Fig. 17;

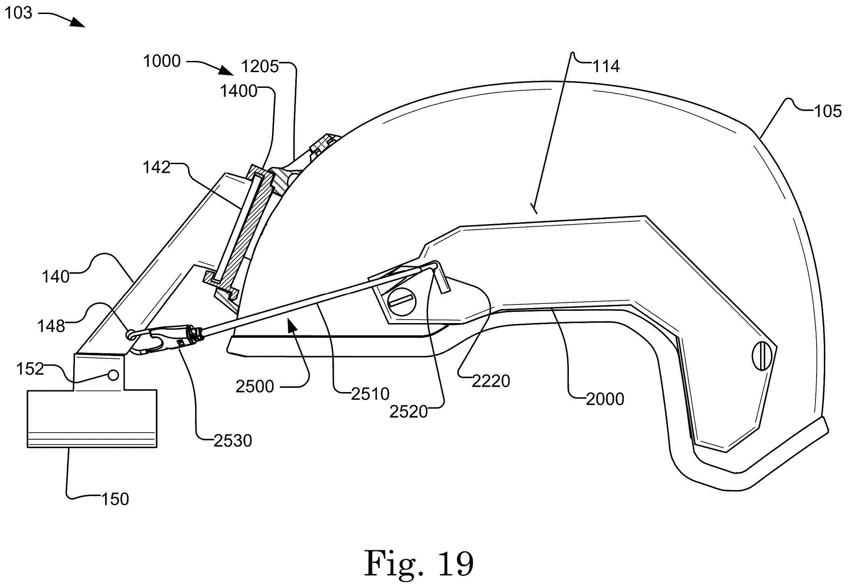

Fig. 19 shows a side schematic view of an embodiment of the helmet system including rail with a first embodiment of a flexible member assembly attached to a first embodiment of a flexible member attachment interface;

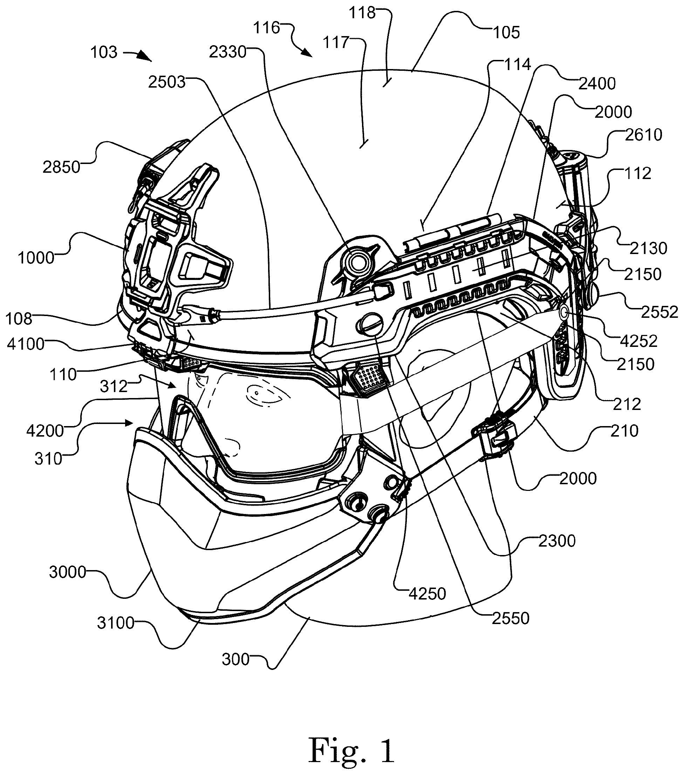

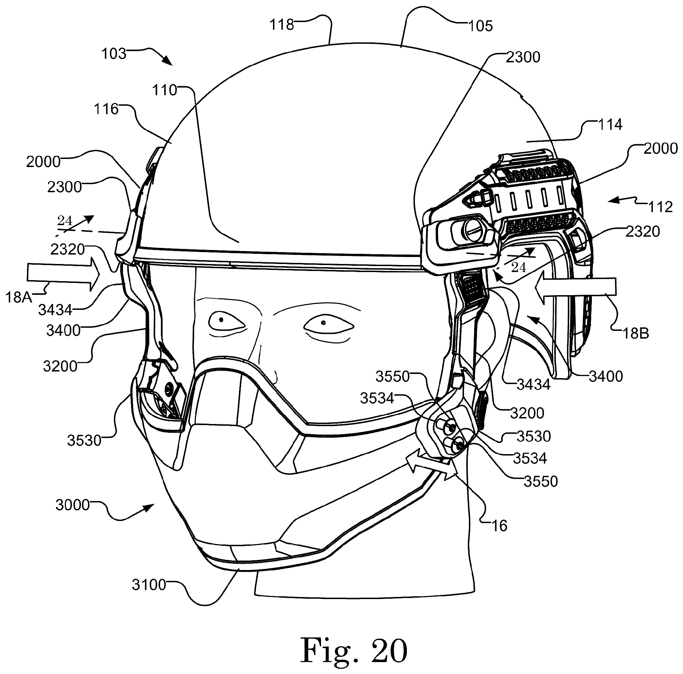

Fig. 20 shows a perspective view of the helmet system shown in Fig. 1 including the mandible assembly, with the fit/retention system, visor assembly, shroud, and RCM removed;

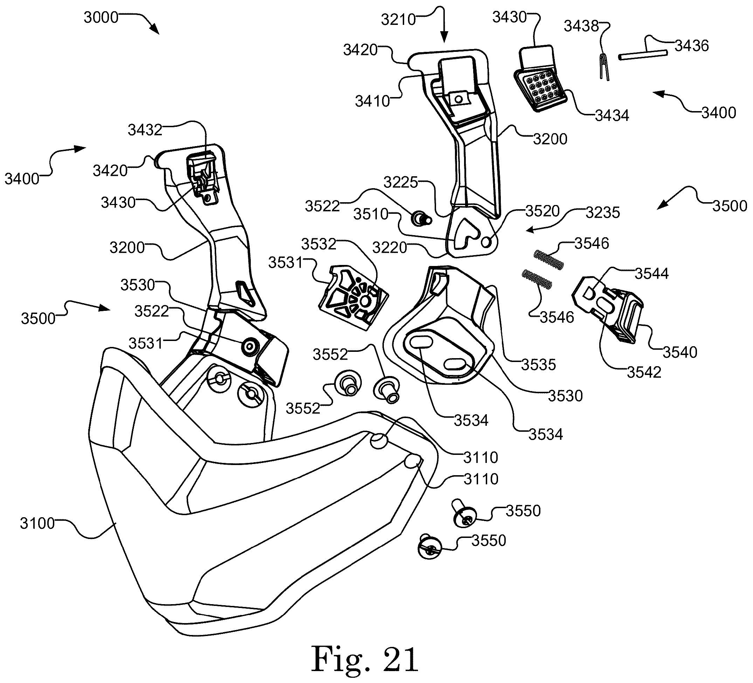

Fig. 21 shows an exploded perspective view of the mandible assembly shown in Fig. 20;

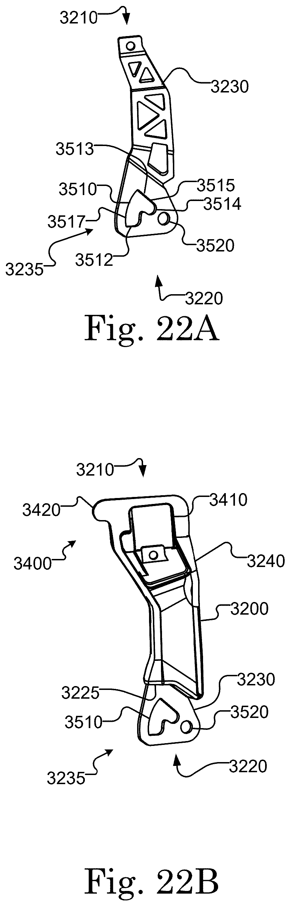

Fig. 22A shows a front view of a core member of an arm component of the mandible assembly shown in Fig. 20;
Fig. 22B shows a front view of the arm component of the mandible assembly shown in Fig. 20, with components of an adapter interface of the arm removed for clarity;

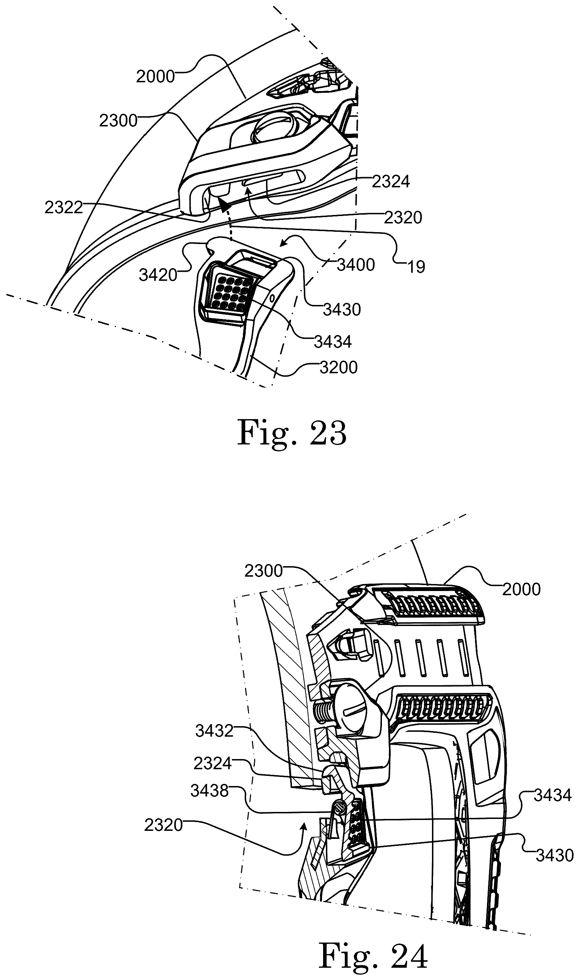

Fig. 23 shows a detail view of an adapter with mandible attachment interface attached to a helmet and an adapter interface of an arm component of the helmet system shown in Fig. 20, with mandible guard assembly disengaged from the helmet;
Fig. 24 shows a detail cross-sectional view taken through line 24 of Fig. 20;

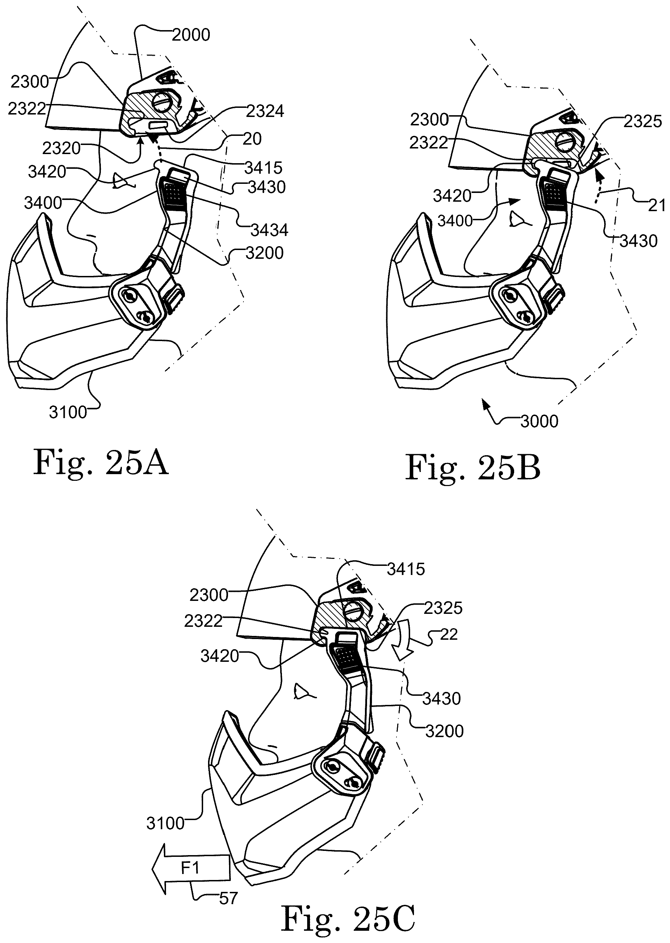

Fig. 25A shows a side detail view of the helmet system shown in Fig. 20 with a portion of the adapter removed, as indicated by hashed lines, with an adapter interface of the mandible guard assembly removed from a mandible assembly interface;
Fig. 25B shows a side detail view of the helmet system shown in Fig. 25A with the adapter interface partially assembled into the mandible assembly interface;
Fig. 25C shows a side detail view of the helmet system shown in Fig. 25A with the adapter interface assembled into the mandible assembly interface;

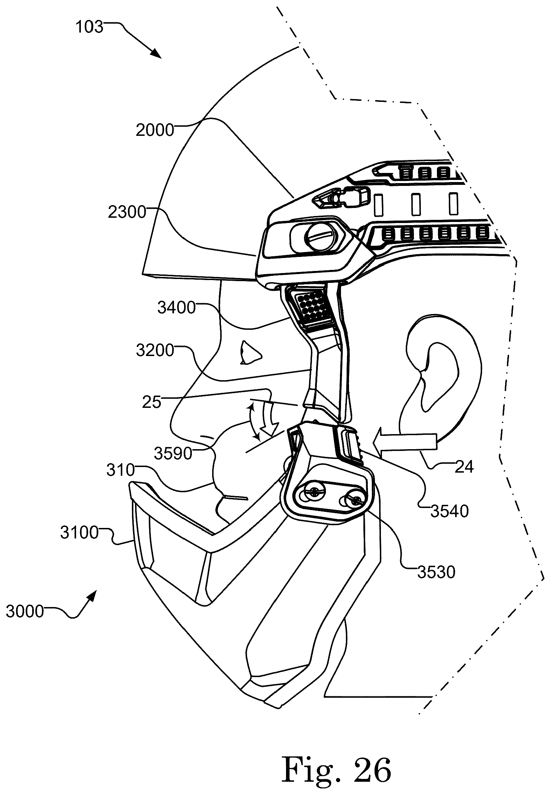

Fig. 26 shows a detail side view of the helmet system shown in Figure 20, with the mandible guard in a drop down position;

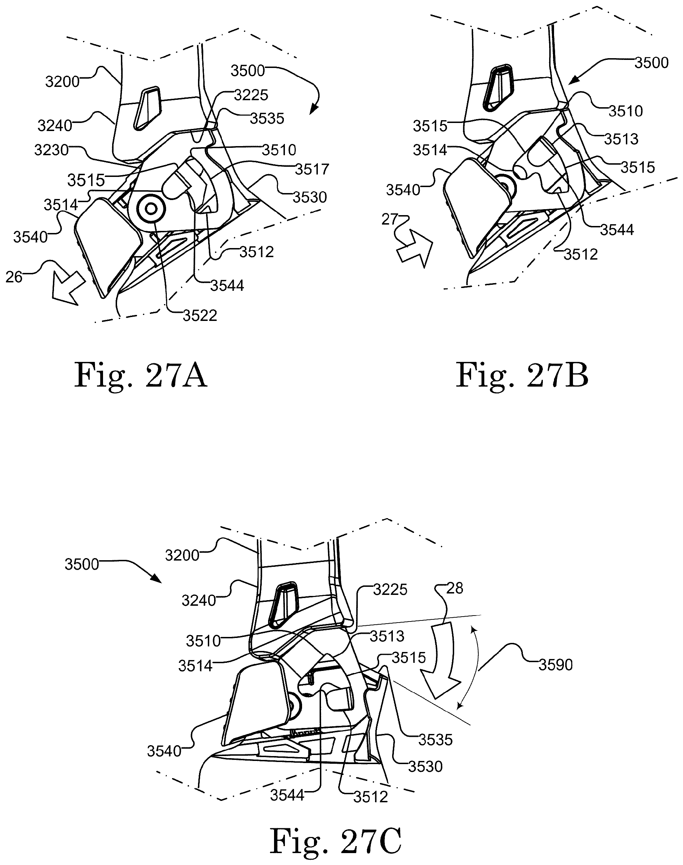

Fig. 27A shows a detail side view of a drop down mechanism of the mandible guard assembly shown in Fig. 26, with a cover of a mandible interface member removed, and with the mandible guard in an upward, locked position;
Fig. 27B shows a detail side view of a drop down mechanism as shown in Fig. 27A, with the mandible guard in an unlocked position;
Fig. 27C shows a detail side view of a drop down mechanism as shown in Fig. 27A, with the mandible guard in a dropped down position;

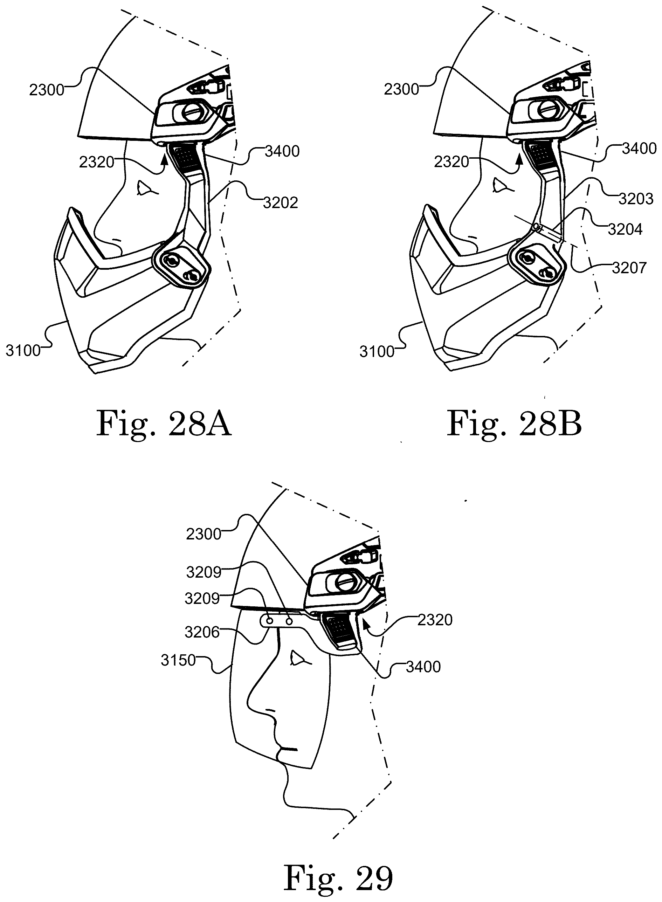

Fig. 28A shows a side detail view of a mandible guard assembly attached to a helmet with a rigid arm;
Fig. 28B shows a side detail view of a mandible guard assembly attached to a helmet with a swing arm;
Fig. 29 shows a side detail view of a visor assembly attached to a helmet;

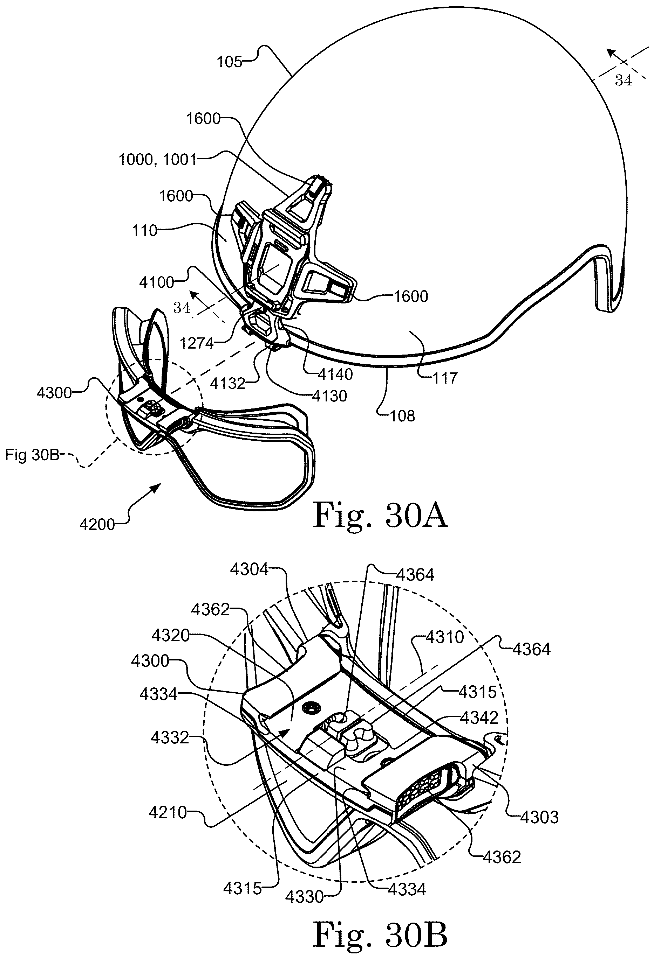

Fig. 30A shows a top perspective view of an embodiment of the helmet system shown in Fig. 1, including the visor mount, visor assembly, and shroud, with additional components removed for clarity and with the visor assembly removed from the visor mount;
Fig. 30B is an enlarged detail view of the area indicated by circle 30B in Fig. 30A;

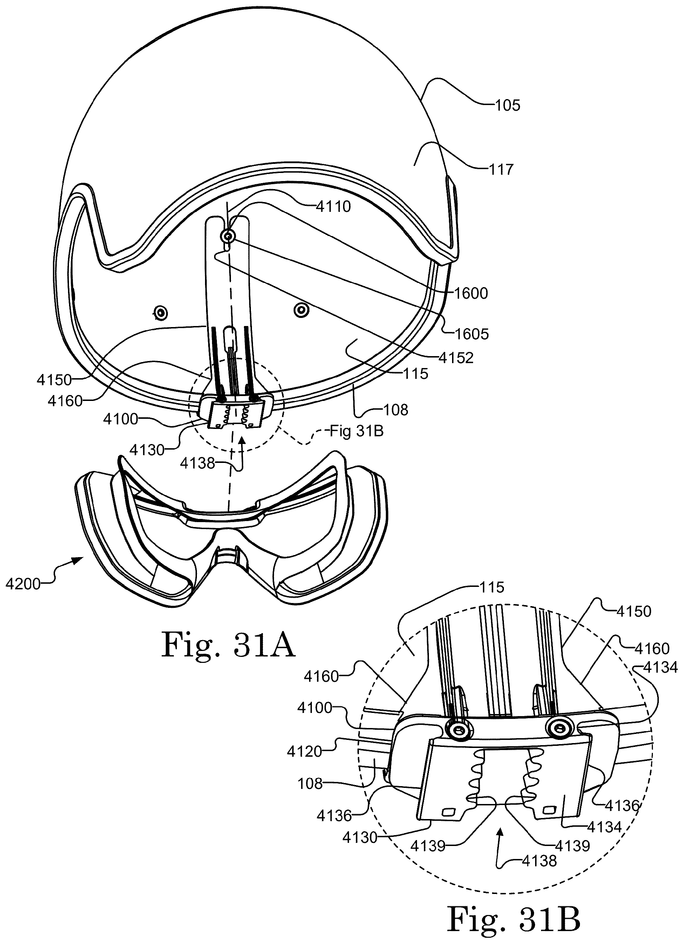

Fig. 31A shows a bottom perspective of the helmet system shown in Fig. 30A;
Fig. 31B is an enlarged detail view of the area indicated by circle 31B in Fig. 31A;

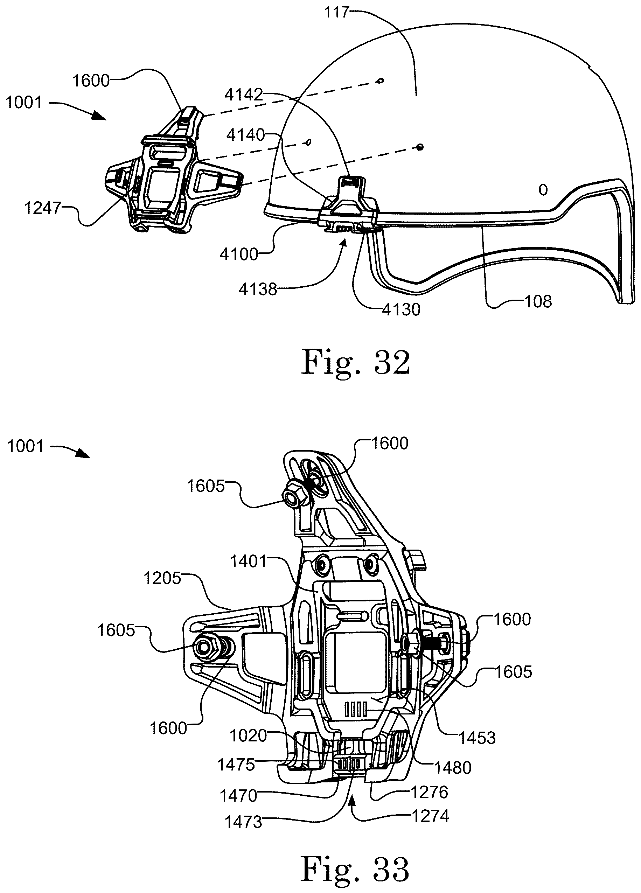

Fig. 32 shows an exploded view of the helmet system shown in Fig. 31A, with the visor assembly not shown;
Fig. 33 shows a rear perspective view of the shroud shown in Fig. 32;

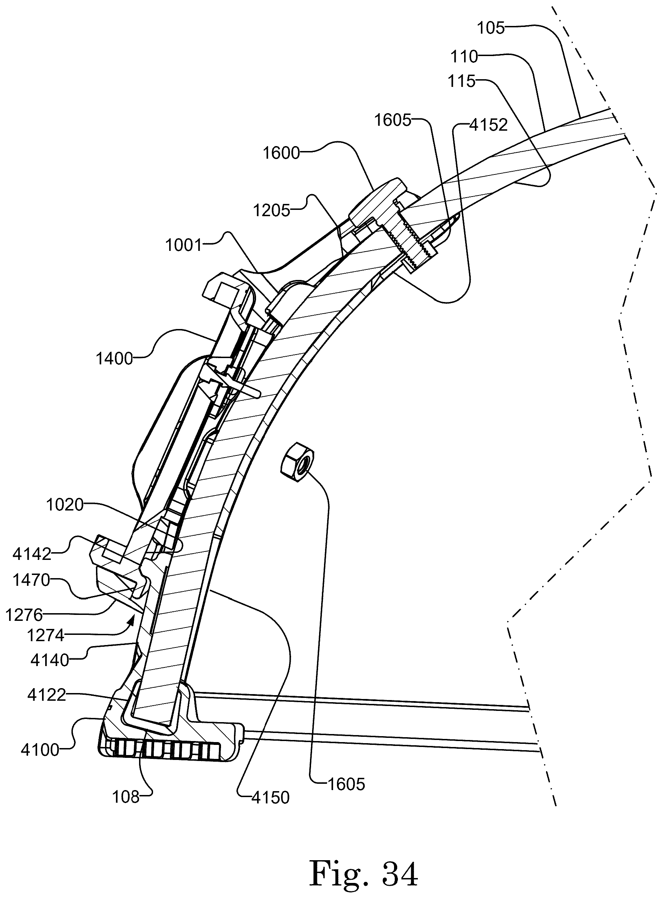

Fig. 34 shows a cross-sectional view of the helmet system shown in Figure 30A with the visor assembly not shown, taken through line 34-34 of Fig. 30A;

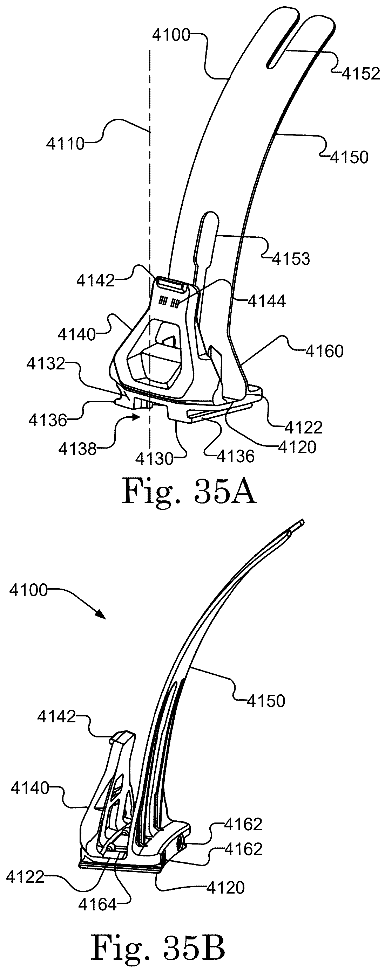

Fig. 35A shows a front perspective view of the visor mount shown in Fig. 30A, including optional electrical interfaces;
Fig. 35B shows a side perspective view of the visor mount shown in Fig. 35A;

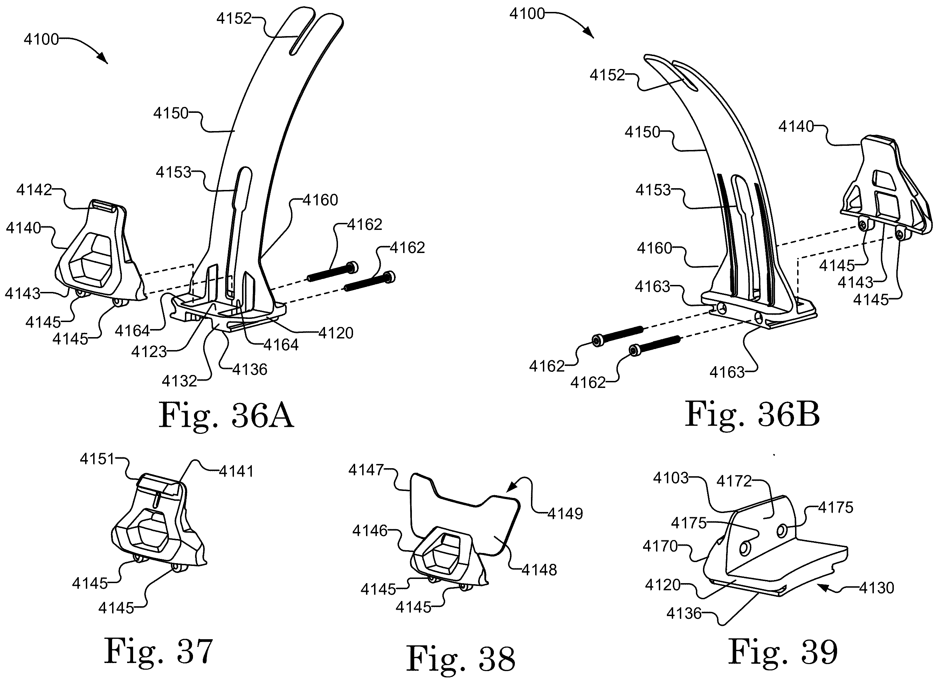

Fig. 36A shows a front perspective exploded view of the visor mount shown in Fig. 30A, without optional electrical interfaces and including a first embodiment of an outer surface member;
Fig. 36B shows a rear perspective exploded view of the visor mount shown in Fig. 36A;
Fig. 37 shows a front perspective view of second embodiment of an outer surface member;
Fig. 38 shows a front perspective view of third embodiment of an outer surface member;
Fig. 39 shows a rear perspective view of fourth embodiment of a visor mount;

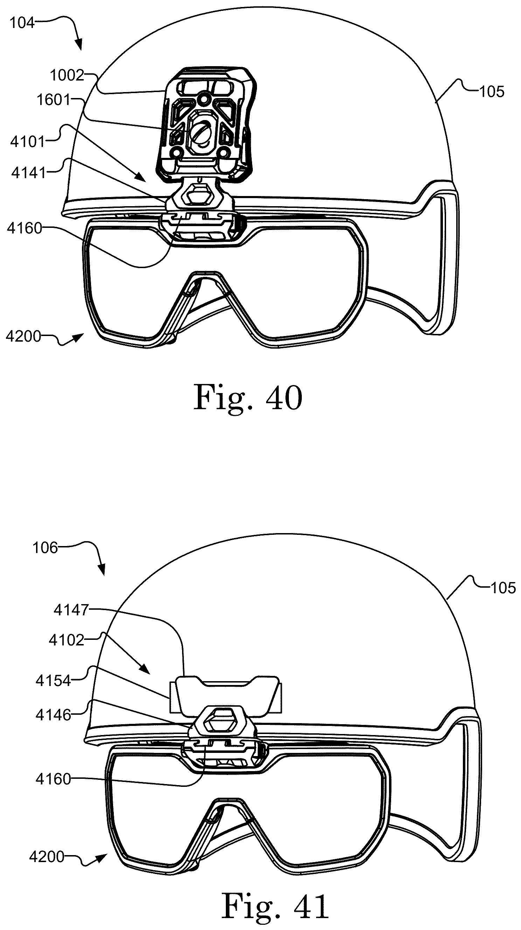

Fig. 40 shows an embodiment of a helmet system including a second embodiment of a visor mount, a visor assembly attached to the visor mount, and with a one-hole shroud mounted on a helmet shell;
Fig. 41 shows an embodiment of a helmet system including a third embodiment of a visor mount and a visor assembly attached to the visor assembly, the helmet system not including a shroud;

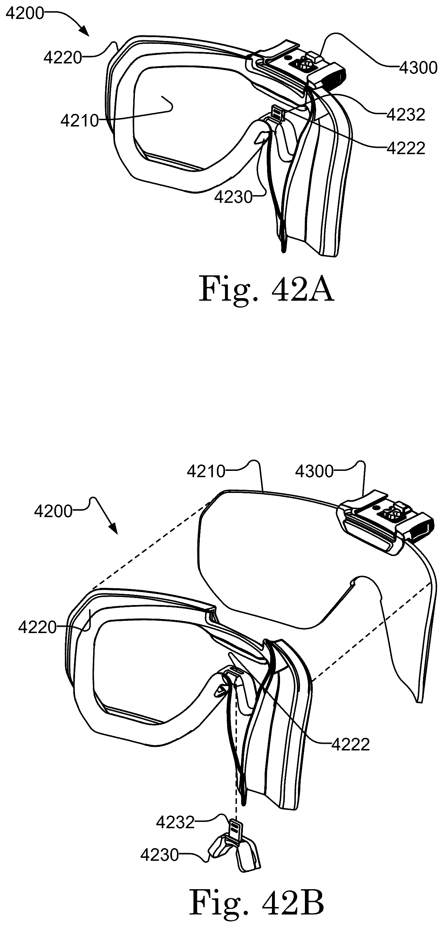

Fig. 42A shows a rear perspective view of the visor assembly shown in Fig. 30A;
Fig. 42B shows a rear exploded perspective view of the visor assembly shown in Fig. 42A;

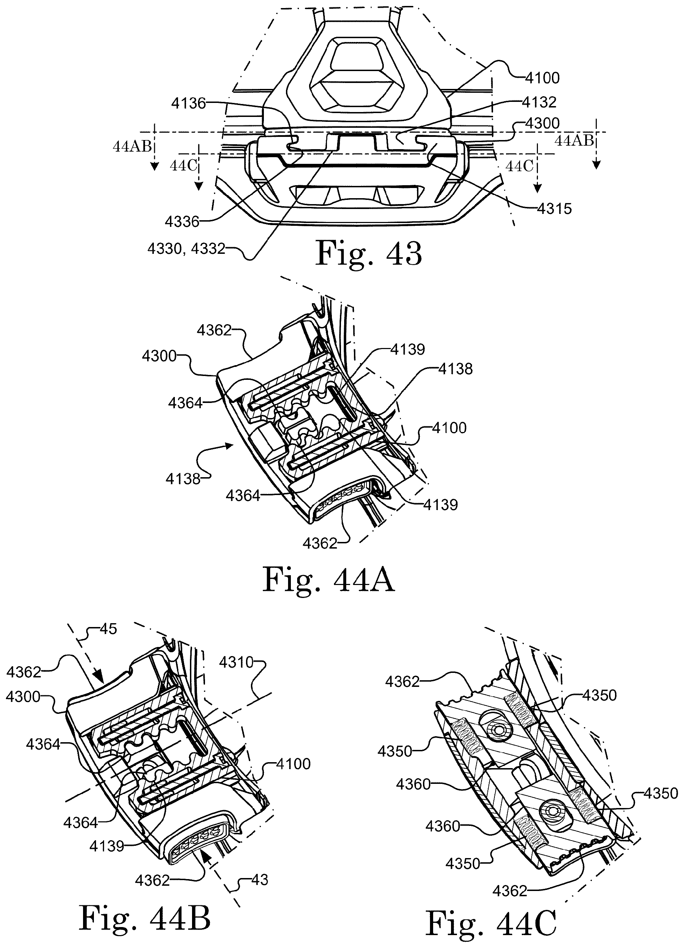

Fig. 43 shows a front detail view of the visor mount and attached visor assembly shown in Fig. 1;
Fig. 44A shows a top perspective sectional view of the visor mount and visor assembly shown in Fig. 43 with locating teeth disengaged, taken through line 44AB in Fig. 43;
Fig. 44B shows a top perspective sectional view of the visor mount and visor assembly shown in Fig. 43 with locating teeth engaged, taken through line 44AB in Fig. 43;
Fig. 44C shows a top perspective sectional view of the visor mount and visor assembly shown in Fig. 43 with locating teeth engaged, taken through line 44C in Fig. 43;

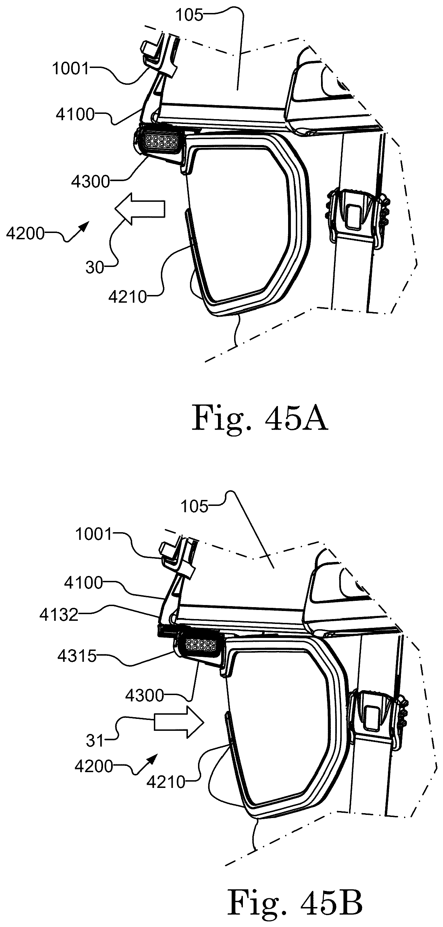

Fig. 45A shows a side detail view of the visor mount and visor assembly shown in Fig. 1 with the visor assembly in a full forward position;
Fig. 45B shows a side detail view of the visor mount and visor assembly shown in Fig. 45A with the visor assembly in a full rearward position;

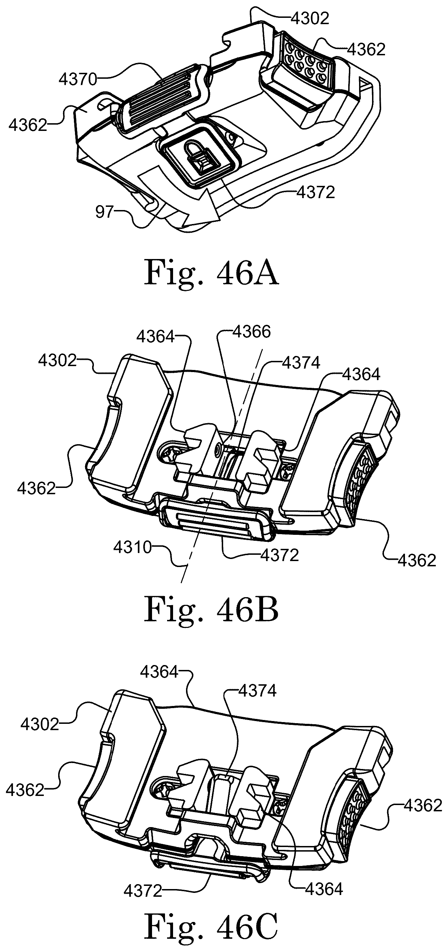

Fig. 46A shows a bottom perspective view of an alternative version of an engagement body of the visor assembly shown in Fig. 1, the alternative engagement body including a visor lock;
Fig. 46B shows a top perspective view of the alternative engagement body shown in Fig. 46A, with the visor lock disengaged;
Fig. 46C shows a top perspective view of the alternative engagement body shown in Fig. 46A, with the visor lock engaged;

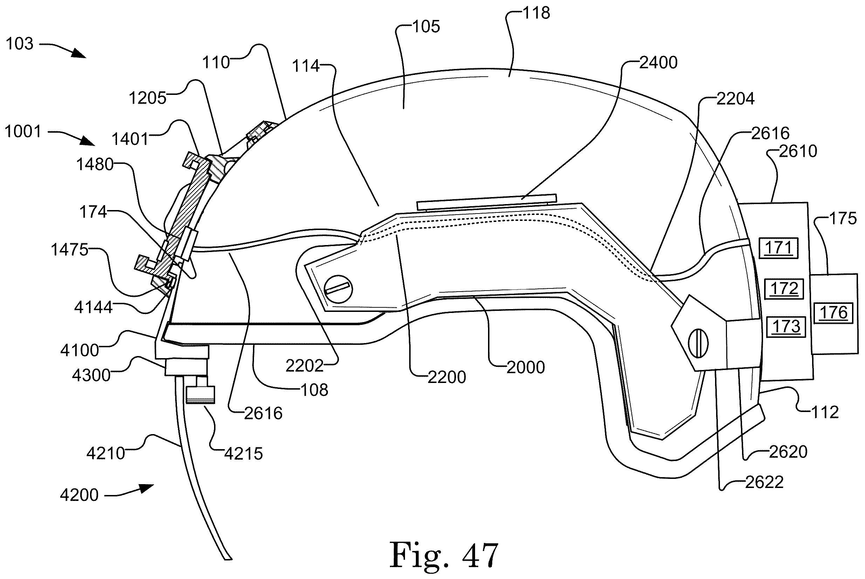

Fig. 47 is a schematic side view of a helmet system according to the technology disclosed herein.

### 6 Description of Some Embodiments of the Invention

### 6.1 Detailed Description of the Invention

As used herein, the term "and/or" includes any and all combinations of one or more of the associated listed items. Further, the singular forms of the articles "a," "an," and "the" are intended to include the plural forms as well, unless expressly stated otherwise. It will be further understood that the terms: "includes," "comprises," "including," and/or "comprising," when used in this specification, specify the presence of stated features, integers, steps, operations, elements, and/or components, but do not preclude the presence of or addition of one or more other features, integers, steps, operations, elements, components, and/or groups thereof. Further, it will be understood that when an element, including component or subsystem, is referred to and/or shown as being connected or coupled to another element, it can be directly connected or coupled to the other element or intervening elements may be present. Further, terms such as "first," "second," etc. are included to differentiate between elements of a claim and do not add limitations to the claim.

The technology disclosed herein will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

### 6.1.1 Overview of a Helmet System

Referring to Fig. 1, an example embodiment of a helmet system 103 is shown. The helmet system 103 may be worn by a user 300, with portions of the helmet system disposed in front of the user's face 310, including the user's eyes 312. The helmet system 103 includes a helmet shell 105. Multiple objects are attached to the helmet shell. The helmet shell 105 includes a front surface 110, a rear surface 112, a top surface 118, a left side surface 114, and a right side surface 116, the right side surface opposing the left side surface across a left-to-right width of the helmet shell. The helmet shell 105 includes a lower rim 108 defining a bottom edge of the helmet shell and extending between an outer surface 117 of the helmet shell, for example front surface 110, and an inner surface 115 (see Fig. 31A) of the helmet shell.

The helmet system 103 includes at least one rail 2000 attached to a side surface of the helmet shell, for example to the left side surface 114. In some embodiments, a second rail (not shown) substantially similar to rail 2000 is attached to the right side surface 116. The rail 2000 is attached to the helmet shell 105 by two fasteners, a front fastener 2550 attaching the rail to the helmet shell 105 near the front surface 110 and a rear fastener 2552 attaching the rail 2000 to the helmet shell 105 near the rear surface 112.

The rail 2000 includes a rail slot 2130, which in some embodiments is a dove tail slot for attaching one or more objects to the rail. A shroud 1000 for attaching one or more accessory devices (not shown) to the helmet system 103 is attached to a front surface 110 of the helmet shell 105. A flexible member assembly 2503 is removably attached to the rail 2000 and to the shroud 1000.

A mandible guard assembly 3000 including a mandible guard 3100 may be removably attached to the helmet system 103, with the mandible guard 3100 disposed in front of a lower portion of the user's face 310. The mandible guard 3100 may be a bump mandible guard providing protection from impacts or a ballistic mandible guard that may provide protection from ballistic projectiles such as bullets and shrapnel.

An adapter 2300 is attached to a front portion of the rail 2000. The adapter 2300 is a mount for attaching an object to the helmet system 103 or helmet shell 105. In an embodiment, the adapter 2300 includes an assembly interface 2320, for example a mandible assembly interface for removably attaching the mandible guard assembly 3000. In embodiments, a second adapter 2302 (not shown) may be disposed on an opposing side, for example on the right side 116, of the helmet shell.

An accessory interface 2330 is removably attached to the rail 2000. In embodiments, a second accessory interface 2336 (not shown) may be disposed on an opposing side, for example on the right side 116, of the helmet shell 105. The accessory interface 2330 is a mount for removably attaching an accessory device to the helmet system 103. In an embodiment, the accessory interface 2330 is useful for attaching a vision system interface 2850 for electrically connecting with a vision system device or a task light mount (not shown) for removably attaching a task light to the helmet system 103.

The adapter 2300 may be attached to the rail 2000, and to the helmet shell 105, with the front fastener 2550 which is also used to attach a front portion of the rail 2000 to the shell. In some embodiments, the helmet includes a harness 210 and a fit system 212. At least a portion of the harness and/or fit system 210/212 may be attached to the helmet shell 105 using the same front fastener 2550 that attaches the adapter 2300 and the rail 2000 to the helmet shell 105. This provides a number of advantages, including reducing a number of fasteners and associated hardware required to assemble the helmet system 103 and reducing a number of fastener interfaces, for example through holes, needed on the helmet shell 105 for assembling the helmet system 103.

A visor mount 4100 is disposed on the front surface 110 of the helmet shell 105. In some embodiments, the visor mount 4100 is partially secured to the helmet shell 105 by the shroud 1000 and by a portion of the visor mount 4100 that extends into an interior portion of the helmet shell 105.

A visor assembly 4200 may be removably attached to the visor mount 4100 and disposed in front of the user's eyes 312, between the mandible guard 3100 and a lower rim 108 of the helmet shell 105. In some embodiments, a strap 4250 may be attached to the visor assembly 4200 and may be removably attachable to the rail 2000. In an embodiment the strap 4250 includes an attachment member 4252 that may be removably coupled to a strap interface 2150 of the rail. The strap 4250, when present, may help retain the visor assembly 4200 on the helmet system 103 in addition to the visor assembly being secured to the visor mount 4100. In some embodiments, the strap 4250 may be omitted.

An embodiment of a rear compute module (RCM) 2610 is disposed on a rear surface 112 of the helmet shell 105. A cable (not shown) may be disposed between the RCM 2610 and an electrical interface or object attached to the helmet shell 105, for example an object attached to the rail 2000, the shroud 1000, or the visor mount 4100. A portion of the cable may pass through a first cable clip 2400 that is attached to the rail 2000 or through a cable passage (not shown) that is partially enclosed by a helmet facing surface of the rail 2000 and by the side surface, e.g. 114 or 116, of the helmet shell 105. The cable may be electronically connected to an electronic interface portion of the shroud 1000, the visor mount 4100, the helmet shell 105, the vision system interface 2850 and/or the rail 2000. The cable enables power and/or data communications between the RCM 2610 and one or more objects, for example one or more accessory devices (not shown) that may be attached to the helmet system 103.

In embodiments, a helmet system 103 may include all or some of the components shown in Fig. 1. For example, a first configuration of the helmet system 103 may include rails 2000, a shroud 1000, and removably flexible member assemblies 2503. A second configuration of the helmet system 103 may include the components of the first configuration and a rear compute module 2610, and in some embodiments one or more cables electrically connecting the rear compute module 2610 to one or more accessory devices, for example to a vision system interface 2850. A third embodiment may include a mandible guard assembly 3000 and may include a visor mount 4100 for removably attaching a visor assembly 4200. Additional embodiments may include a visor mount 4100 and visor assembly 4200 without a mandible guard assembly 3000 or a mandible guard assembly 3000 without a visor mount 4100 and/or without a visor assembly 4200 attached to the visor mount 4100. An embodiment of a helmet system 103 that includes rail 2000 may include one or more flexible member assemblies 2503 attached to the rails or may not include a flexible member assembly 2503, in which case the rails 2000 may be configured for a user to add a flexible member assembly when desired. An embodiment may include one or more accessory interfaces 2330 and/or cable clips 2400 while another embodiment may not include one or more of an accessory interface 2330 and a cable clip 2400. Advantageously an embodiment of the helmet system 103 may be configured with some or all of the components shown in, for example, Fig. 1 and may be subsequently retrofitted to add or remove components as needed or desired.

### 6.1.2 Rails

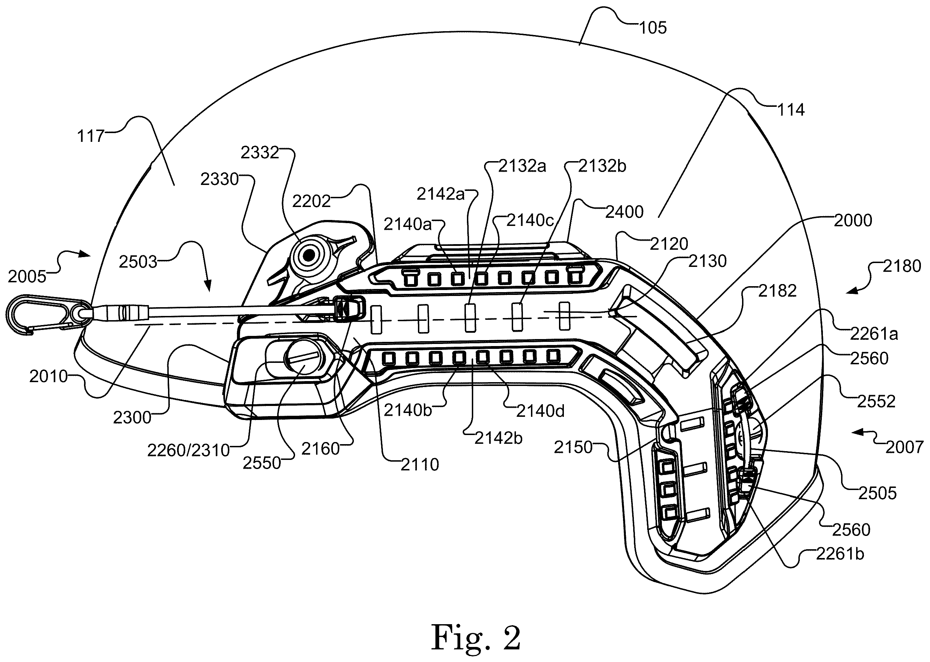

Referring to Figs. 1, 2, 3A, 3B, and 6, a first example embodiment of a rail 2000 includes a first fastener opening 2160 located near a front portion 2005 of the rail 2000 and a second fastener opening 2162 located near a rear portion 2007 of the rail 2000. The first fastener opening 2160 and second fastener opening 2162 each pass through the rail 2000 to receive a fastener (e.g. 2550 or 2552), for example a threaded fastener, for attaching the rail 2000 to a helmet shell, e.g. 105 (see Figs. 1 and 2).

In embodiments, the rail 2000 may include a slot 2130 for removably attaching one or more accessory devices to the rail. Example embodiments of the slot include dovetail or other tapered slots, rectangular slots, Picatinny rails, key-shaped slots, or other known configurations.

As may be seen, for example in Fig. 2, the rail 2000 may include one or more indentations 2132, for example 2132a and 2132b, disposed within the slot 2130, for example on a portion of the outward facing surface 2110 that extends into the slot. The indentations 2132 may be for positioning an accessory device in multiple locations along the slot 2130. The rail 2000 may further include a plurality of protrusions 2140 disposed along an axial length of the slot 2130, i.e. disposed along the longitudinal axis 2010 of the rail 2000. Pairs of protrusions, for example 2140a, 2140b and 2140c, 2140d, may be disposed on opposing sides of the slot 2130. A gap 2142 may be formed between adjacent protrusions 2140 disposed on a first side of the slot 2130, for example first gap 2142a between protrusions 2140a and 2040c and second gap 2142b between protrusions 2140b and 2140d.

A pair of gaps 2142 may be aligned with an indentation. For example, gaps 2142a and 2142b may be aligned with indentation 2132a. The gaps 2142 may provide positioning for an accessory disposed along a rail, in addition to or instead of the indentations 2132. Known rails may include arrays of indentations on opposing sides of a rail slot for aiding in positioning an object, for example an accessory device.

The gaps 2142 of the technology disclosed herein may be different from known indentations at least in that they are only partially enclosed, for example bounded by protrusions 2140 on two sides only, for example on two opposing sides, each side formed by a portion of a protrusion, whereas known indentations for positioning objects along known rails may be bounded on three or four sides. The opposing arrays of protrusions 2140 and gaps 2142 of the technology disclosed herein provides a number of advantages, for example it may be easier to clean the rail 2000 and the gaps 2142 are less likely to become obstructed, for example with debris, dirt, mud, or ice as compared to the arrays of opposing indentations of known rails.

The rail 2000 includes a one or more flexible member attachment interfaces, e.g., 2260, 2261. In an embodiment, a flexible member interface, for example flexible member interface 2260, may be disposed on a side wall or outward facing surface 2110 of the rail for removably attaching a flexible member assembly, for example 2503, to the rail. In some embodiments, a flexible member attachment interface 2260 may be disposed on a front portion 2005 of the rail 2000, may be partially disposed within the slot 2130, or may be disposed on another portion of the rail. The flexible member attachment interface 2260 may be configured so that a flexible member assembly 2503 that is removably attached to the flexible member attachment interface 2260 does not block attachment or removal of objects from the slot 2130. In an example, components of the flexible member assembly 2503 are flush with, i.e. do not extend above, an outward facing surface 2100 of the rail 2000 and/or the slot 2130.

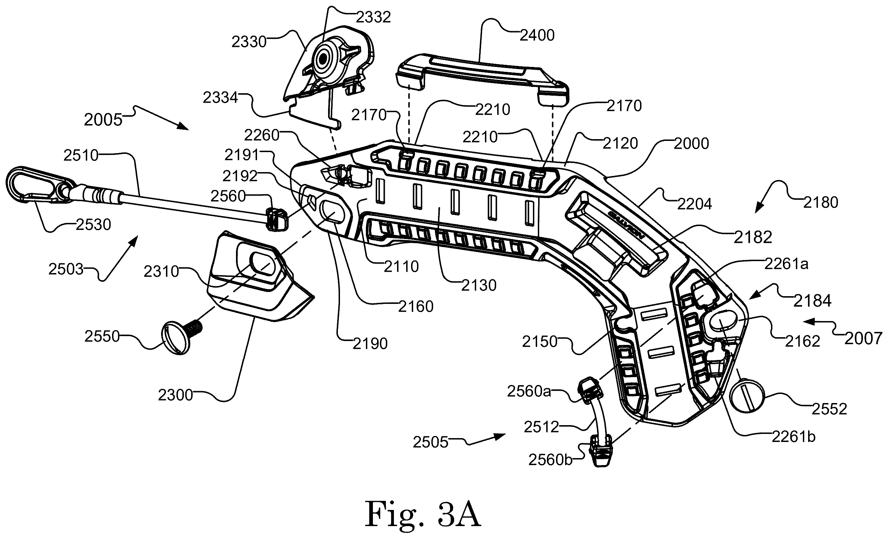

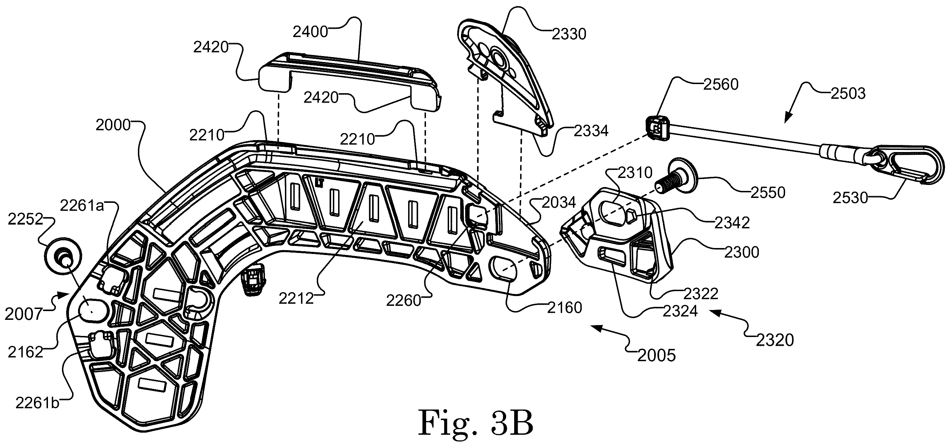

Referring, for example, to Figs. 3A and 3B, the flexible member assembly 2503 includes a flexible member 2510 with two ends. A snap coupling member 2560, also referred to as a third coupling member, is disposed on a proximal end of the flexible member 2510 and a connector 2530 is disposed on a distal end of the flexible member. The connector 2530 may be a carabiner, spring clip, hook, or other suitable interface device for connecting the flexible member assembly 2503 to an object, for example to the front shroud 1000. The snap coupling member may be assembled onto the flexible member attachment interface 2260 to removably attach the flexible member assembly 2503 to the rail 2000.

In some embodiments, one or more paired flexible member interfaces 2261 may be disposed on the rail 2000. Referring to Figs. 2, 3A, and 3B, a pair of flexible member interfaces 2261a and 2261b may be disposed on a rear portion 2007 of the rail 2000. Each pair of flexible member interfaces 2261 may be configured for removably attaching a double-ended flexible member assembly 2505 to the rail 2000. The double-ended flexible member assembly 2505 includes a flexible member 2512 having two ends, with a rail coupling member, for example a snap coupling member 2560, disposed on each end of the flexible member 2512. Each snap coupling member 2560 may be separately assembled into one of a pair of flexible member interfaces 2261 to attach the double-ended flexible member assembly 2505 to the rail 2000. The double-ended flexible member assembly 2505 may be useful for providing an attachment point for a strap, cable, or the like. In embodiments, a single instance of a paired flexible member interface 2261 may be disposed on the rail 2000, or on another component or portion of the helmet system 103, in a similar manner as for a flexible member interface 2160.

It is noted that in embodiments, a flexible member interface 2260 and/or a set of paired flexible member interfaces 2261 may be disposed on locations on helmet system 103 in addition to or alternatively to the rail 2000, which may be referred to herein as a mount. For example, a flexible member interface 2260 or set of paired interfaces 2261 may be disposed on the helmet shell 105 or on a different helmet mount, for example on a shroud 1000, an adapter 2300, or an accessory interface 2330 for attaching one or more flexible members to the helmet system 103. In a similar manner one or more flexible member interfaces 2260 or 2261 may be disposed on an object, for example on a visor assembly 4200 or another accessory for attaching one of more flexible members to the object.

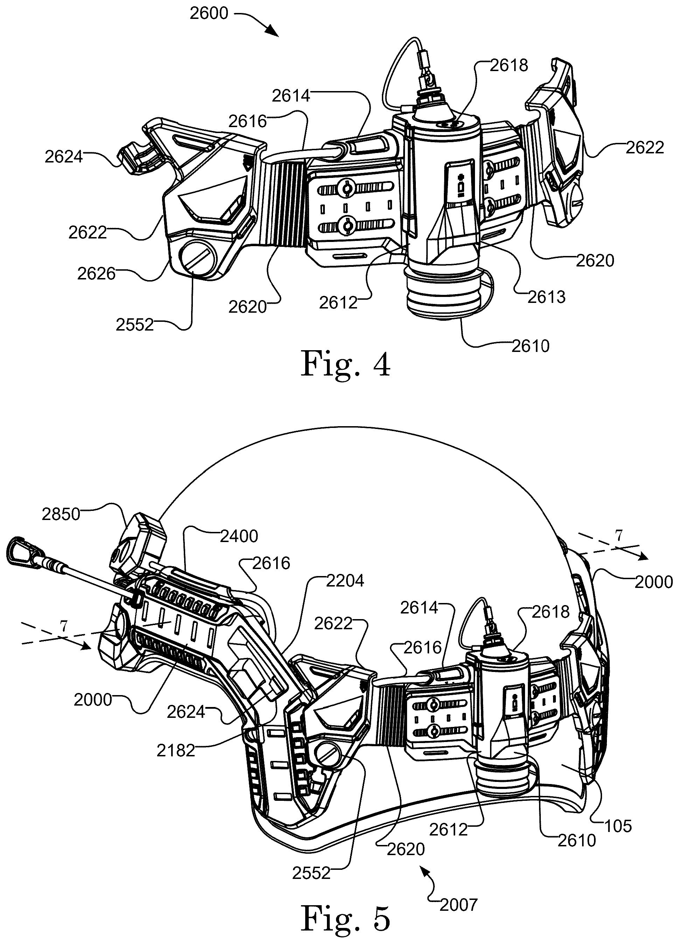

The rail 2000 includes one or more, for example two, cable clip interfaces 2210 disposed on a top wall 2120 of the rail for attaching a first cable clip 2400 to the rail. The first cable clip 2400 includes one or more, for example two, locking portions 2420 for removably coupling the first cable clip 2400 to the rail 2000 when a locking portion 2420 is assembled into a corresponding cable clip interface 2210. The first cable clip 2400 is for managing one or more flexible elements, for example: a cable 2616 (see Figs. 5 through 8, for example) that includes one or more electrical conductors; other flexible elements that include electrical conductors, for example a flexible circuit board; a paracord; a bungee cord; or another flexible or rigid element having a size suitable for assembly onto an object coupling potion of the cable clip 2400.

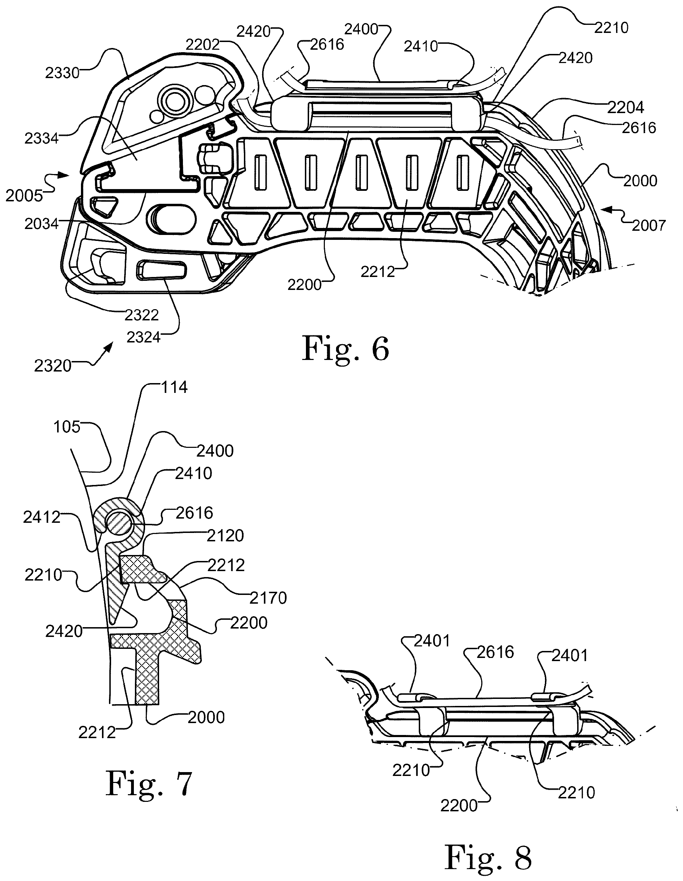

The rail includes one or more, for example two, clip openings 2170 that extend through the side wall 2110 of the rail, each clip opening 2170 configured for receiving a flexible fastener, for example a zip tie, that may be useful for managing one or more flexible elements, for example one or more cables 2616 or other electrical conductors. The clip openings 2170 are also useful for dislodging a first cable clip 2400 from the rail. In an example, referring for example to Fig. 7, a user may insert a screw driver or other object into a clip opening 2170 to dislodge a locking member 2420 from the rail 2000.

The rail 2000 may include a strap interface 2150 for attaching a strap 4250 to the rail 2000 (see, for example, Figs. 1 and 2), for example for attaching a goggle or visor jump strap 4250 to the rail for securing goggles or a visor assembly 4200.

The rail 2000 may include a rear compute module (RCM) interface 2180 for attaching a rear compute module (RCM) assembly 2600 to the rail 2000 (see, e.g., Figs, 2, 3A, 4 and 5). The RCM interface 2180 includes a rail interface receiver portion 2184 disposed at least in part on the side wall 2110 of the rail 2000, near a rear portion 2007 of the rail, for receiving a rail interface element 2622 for attaching the RCM assembly 2600 to the rail 2000 and a rail clip opening 2182 for receiving a clip portion 2624 of a rail interface element 2622 of the RCM assembly 2600. The rail 2000 includes a second fastener opening 2162 disposed near a rear portion 2007 of the rail for receiving the rear rail fastener 2552 for attaching the rail 2000 to the helmet shell 105. The rear rail fastener 2552 may also secure the rear interface element 2622 to the helmet shell 105 for securing the RCM assembly 2600 to the helmet shell 105. The rear rail fastener 2552, in some embodiments, may also secure a portion of a harness 210 and/or fit system 212 to the helmet shell 105 (see Fig. 1). It is noted that the RCM assembly 2600 may not be present in some embodiments.

Referring to Figs. 4 and 5, an example embodiment of an RCM assembly 2600 includes an RCM 2610. The RCM 2610 includes two adjustable length attachment arms 2620, a proximal end of each attached to a one of two opposing lateral sides 2612 and 2613 of the RCM 2610 and extending laterally outward from the RCM. Each attachment arm 2620 includes a rail interface element 2622 disposed at a distal end of the attachment arm. The rail interface elements 2622 are for attaching each attachment arm 2620 to a corresponding rail 2000 to attach the RCM assembly 2600 to a helmet system (e.g. 103).

The rail interface element 2622 includes fastener opening 2626 and a rail interface clip 2624. The rail interface clip 2624 may be disposed in the rail clip opening 2182 to partially secure the rail interface body 2622 to the rail 2000. The rail interface body 2622 is assembled onto the rail clip opening 2182 and the rail interface receiver portion 2184 of the rail 2000. The rear fastener 2552 attaches both the rail interface body 2622 and the rail 2000 to the helmet shell 105. Referring to Fig. 1, in some embodiments the rear fastener 2552 also attaches a portion of a harness and/or fit system 210/212 to the helmet shell 105 in addition to attaching the rail 2000 and the rail interface body 2622 to the helmet shell. This provides a number of advantages, including reducing a number of fasteners and associated hardware required to assemble components of the helmet system 103 and reducing a number of fastener interfaces, for example through holes, needed on the helmet shell 105 for assembling components onto the helmet system 103.

The RCM 2610 may include one or more of a processor, associated memory, and a first power source (not shown). The RCM 2610 may include a power module electromechanical interface 2618 for removably attaching and electrically connecting a power module (not shown) to the RCM 2610. The power module may include one or more second power sources. The one or more second power sources may be electrically connected to the RCM 2610 via the power module interface 2618 for providing power, for example secondary power, to the RCM 2610.

Referring to Figs. 4 through 7, in some embodiments, the RCM 2610 may include at least one cable interface 2614, disposed on the first lateral side 2612 of the RCM, for attaching an electrical conductor, for example cable 2616, to the RCM. It is noted that as used herein, the term cable may refer to any flexible element that includes at least one electrical conductor, for example a cable comprising a single wire, a cable including multiple wires, a plurality of individual cables or wires, or a flexible circuit structure. The cable 2616 may include one or more electrically conducting elements for carrying power and/or communication signals. Additional embodiments of an RCM 2610 may include two or more cable interfaces 2614 and two or more cables 2616. For example, an additional embodiment may include a second cable interface 2614 connected to a second cable 2616 disposed on the second lateral side 2613 of the RCM 2610.

The cable 2616 is for communicating power and/or communication signals with one or more accessory devices that may be mounted on the helmet system 103, for example attached to a rail 2000, to an accessory interface 2330, to an adapter 2300, or to the shroud 1000. The cable 2616 is for exchanging one or more of power and communication signals from the RCM 2610 and an accessory device. In an example, the cable may be for exchanging one or more of power and communication signals with a vision system interface 2850 or with one or more alternative or additional electrical interfaces.

Referring, for example, to Figs. 6 through 8, the rail 2000 may include a cable routing channel 2200 disposed between a helmet facing surface 2212 of the rail and an outer surface, e.g. side surface 114, of the helmet shell 105 when the rail 2000 is attached to the helmet shell 105 to form a cable routing passage that is partially enclosed by the cable routing channel 2200 and partially enclosed by the outer surface 114 of the helmet shell 105. A front cable opening 2202 is disposed on a top wall 2120 of the rail 2000 near or at a front portion 2005 of the rail. A rear cable opening 2204 is disposed on a rear portion 2007 of the rail. The front and rear cable openings 2202 and 2204 each form a passage to the cable routing 2200 channel for passing a cable into or out of the cable routing channel 2200.

Referring now to Figs. 4 and 5, the rail interface body 2622 may include one or more cable management features, for example a cavity for housing a portion of the cable disposed on a helmet facing surface of the rail interface body 2622.

The cable 2616 may pass through the rail interface element 2622 and into the first cable clip 2400 or through the rear cable opening 2204 and into the cable routing channel 2200.

Referring to Figs. 6 and 7, the first cable clip 2400 includes a cable channel 2410 for receiving a cable 2616 or the like and a locking portion 2420 for retaining the first cable clip 2400 on the rail 2000 when the first cable clip 2400 is assembled onto the rail 2000. The locking portion 2420 may be assembled through the cable clip interface 2210 of the rail 2000. When the locking portion 2420 is assembled onto the rail 2000, it is held in place by an interface surface 2212 on a helmet facing portion of the rail 2000, as best seen in Fig. 7. A user may insert a tool, for example a screwdriver or other tool, through the clip opening 2170 to dislodge the locking portion 2420 from the interface surface 2212.

The first cable clip 2400 includes a cable channel portion 2410 that is disposed exterior to the rail 2000 when the first cable clip 2400 is assembled on the rail. The cable channel 2410, with an outer surface of the helmet shell, e.g. 114, forms a cable passage 2412 for holding the cable. The cable passage is partially bounded by the cable channel 2410 and by the outer surface 114 of the helmet shell 105.

Referring now to Fig. 8, in some embodiments multiple second cable clips 2401 may be used to manage one or more cables 2616. Each second cable clip 2401 is shorter in length than the first cable clip 2400. In some embodiments, two or more second cable clips 2401 may be assembled onto a cable and then assembled onto the rail 2000, for example by inserting the second cable clips 2401 into one or more cable clip interfaces, e.g. 2210.

The cable clips 2400 and 2401 may be formed from a stiff rubber or flexible plastic material to allow them to flex to receive or release a cable, e.g. cable 2616, and to facilitate assembly of a cable clip into a cable clip interface 2210. In at least one embodiment, a cable clip is formed by molding a polymer material over a thin metal structure. The cable clips 2400 and 2401 provide a number of advantages, including adding removable and replaceable cable management features to the rail 2000 for better management of cables that may be used to connect accessory devices of the helmet system 103 to the RCM 2610.

It is noted that one or more features and components described herein for managing one or more cables 2616, for example cable clips 2400 and 2401 and cable routing channel 2200 may be used for routing and managing alternative or additional objects, for example a paracord, bungee cord, non-extensible cord, or the like.

### 6.1.3 Removable Flexible members

The technology herein includes flexible attachment members, for example bungee cords or shock cords, for example flexible member assembly 2503, that may be removably attached to a helmet mount, for example to a rail 2000, or to other mounts, for example a shroud 1000, to a helmet shell 105, and to accessories, for example a visor assembly 4200. This is advantageous at least in that it enables a user to configure and reconfigure a helmet system, for example 103, to add and remove attachment members as desired and to remove and replace damaged attachment members comprising flexible members.

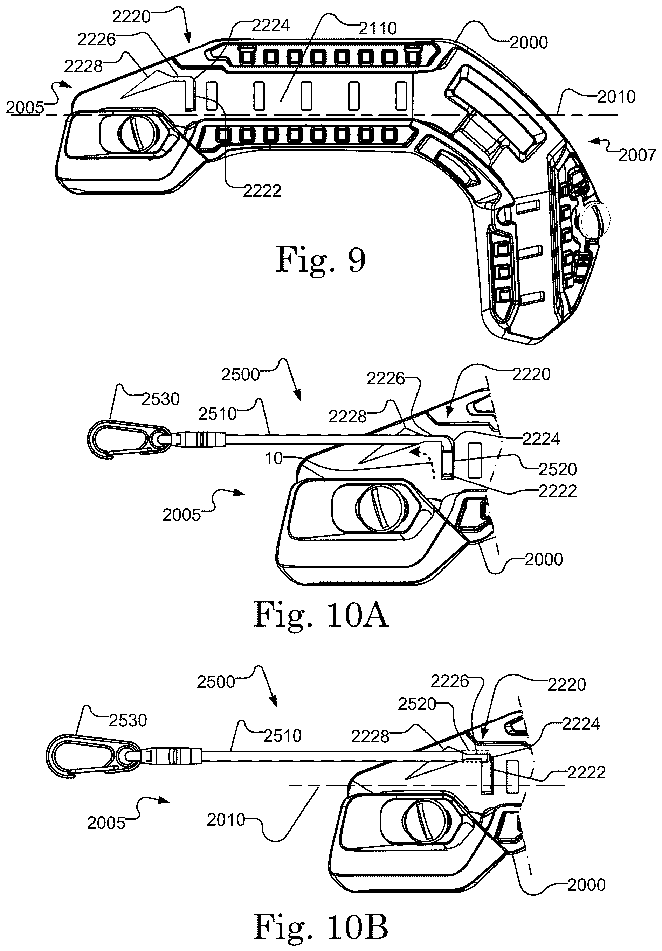

Referring now to Figs. 9, 10A, and 10B, a first embodiment of a flexible member attachment interface 2220, also known herein as a first attachment interface 2220, is configured for removably attaching a first flexible member assembly 2500 to a rail 2000. The first attachment interface 2220 may be disposed on the outer wall 2110 of the rail 2000, near the front portion 2005. The first attachment interface 2220 may be formed as an opening through the outer wall 2110. The first attachment interface 2220 includes a receiver opening 2222, also referred to as an assembly portion, a lock portion 2226, and a transition portion 2224 that connects the loading portion to the lock portion. The receiver opening 2222 may be referred to herein as a coupling member receiver opening, or an assembly portion of the first attachment interface 2220.

The flexible member assembly 2500 includes a flexible member 2510, for example an elastically deformable member, for example a bungee cord or paracord, or another type of flexible member, for example a non-elastic cord or strap. The flexible member assembly 2500 includes a connector element 2530, for example a clip, carabiner, or hook, attached to a distal end of the flexible member, and a first rail coupling member 2520 attached to a proximal end of the flexible member 2510. The first rail coupling member 2520 may be referred to herein more generally as a first coupling member, for example for attaching the flexible member assembly 2500 to a helmet system component other than a rail. The first coupling member 2520 may be formed as a cylindrical construct that is fastened over the proximal end of the flexible element 2510. In some embodiments, the first coupling member 2520 includes a metal cylinder that may be crimped onto the proximal end of the flexible member 2510. In some embodiments, an outer diameter of the first coupling member 2520 is larger than an outer diameter of the flexible member 2510.

In some embodiments the receiver opening 2222 is for assembling the first coupling member 2520 into the first attachment interface 2220 and for removing the first coupling member from the first attachment interface. The receiver opening 2222 is formed as an opening in the rail 2000 formed as a groove with a width that is larger than an outer diameter of the first coupling member 2520 to facilitate inserting the first rail coupling member into the receiver opening 2222. In some embodiments, the receiver opening 2222 is disposed to extend in a vertical direction, perpendicular to a longitudinal axis 2010 of the rail. However, in some embodiments the receiver opening 2222 may be disposed at a greater than 90 degree angle or less than 90 degree angle relative to the longitudinal axis. In some embodiments, the lock portion 2226 extends at a right angle from the assembly portion 2222. However, the lock portion 2226 may extend at a greater than 90 degree or lesser than 90 degree angle from the receiver opening 2222. The transition portion 2224 is formed as a bend between the receiver opening 2222 and the lock portion 2226. Together, the receiver opening 2222, transition portion 2224, and lock portion 2226 form a contiguous opening through an exterior wall of the rail.

The first coupling member 2520 and a portion of the flexible member 2510 can be assembled into the flexible member attachment interface 2220 with the first coupling member 2520 disposed in the receiver opening 2222, as shown Fig. 10A. A portion of the flexible member 2510 may pass through the transition portion 2224 and the lock portion 2226, to exit the first attachment interface 2220 at an outwardly tapered opening 2228 which forms an opening from the first attachment interface 2220 toward the front 2005 of the rail 2000. The connector element 2530 is disposed outside of the first attachment interface 2220.

After the flexible member 2510 and first coupling member 2520 are assembled into the first attachment interface 2220, tension may be placed on the flexible member 2510 to pull the first coupling member 2520 from the receiver opening 2222, through the transition portion 2224, and into the lock portion 2226 of the first attachment interface 2220, as indicated by curved arrow 10. In this manner, the first coupling member 2520 is loaded into the receiver opening 2222, transits the transition portion 2224, and becomes lodged in the lock portion 2226. The lock portion 2226 and first coupling member 2520 are sized to provide an interference fit between them such that the first coupling member 2520 is retained within the lock portion 2226, thereby removably attaching the first embodiment of a flexible member assembly 2500 to the rail 2000, as shown for example in Fig. 10B . When the first coupling member 2520 is disposed in the lock portion 2226, tension applied to the flexible member 2510 will tend to pull the first coupling member 2520 into the lock portion so that the flexible member assembly 2500 remains coupled to the first attachment interface 2220.

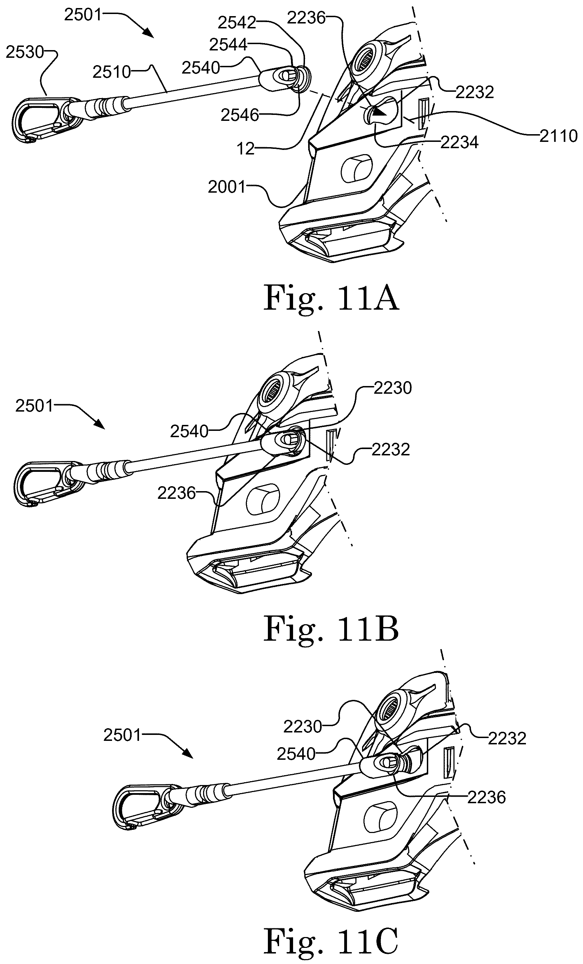

Referring to Figs. 11A through 11C, a second embodiment of a removable flexible member assembly 2501 includes a second coupling member 2540 attached to the proximal end of a flexible member 2510. A connecter element 2530 may be attached to a distal end of the flexible member 2510. The second coupling member 2540 includes a first interface portion 2542 and a second interface portion 2544. The second interface portion 2544 is disposed between the first interface portion 2542 and the flexible member 2510. A groove 2546 is disposed between the first interface portion 2542 and the second interface portion 2544.

A second embodiment of a rail 2001 includes a second embodiment of a flexible member attachment interface 2230, or second attachment interface, formed as an opening through a side wall 2110 of the rail. The second attachment interface 2230 includes a lock portion 2236 connected to a second receiver opening 2232, which may be configured as an assembly portion of the second attachment interface 2230 for assembling the second coupling member 2540 into the second attachment interface 2230. The second receiver opening 2232 is connected to the lock portion 2236 by a tapered transition portion 2234.

The second receiver opening 2232, also called the second loading portion, of the second attachment interface 2230 is configured to allow the first interface portion 2542 of the second rail coupling member 2540 to be assembled onto the rail 2000 through the second receiver opening 2232. In an embodiment, the first interface portion 2542 is formed with a circular shape having a first diameter and the second receiver opening 2232 is formed as a rounded opening having a second diameter that is larger than the first diameter. The second interface portion 2544 may be formed with a rounded boss having a third diameter. The lock portion 2236 of the second flexible member interface 2230 has a rounded opening with a diameter that is less than first diameter and the third diameter. The first interface portion 2542 and second interface portion 2544 cannot pass through the side wall 2110 of the rail when the rail interface member 2540 is disposed in the lock portion 2236. The second coupling member 2540 is thus retained in the second flexible member interface 2230 when it is disposed in the lock portion 2236. The lock portion 2236 may be formed to provide an interference fit with the groove 2546 of the rail interface member 2540 to retain the rail interface member in the lock portion 2236. When the second coupling member 2540 is disposed in the lock portion 2236, tension applied to the flexible member 2510 will tend to pull the second coupling member 2540 into the lock portion 2236 so that the flexible member assembly 2501 remains coupled to the second attachment interface 2230.

The first interface portion 2542 of the second interface member 2540 may be disposed in the second receiver opening 2232 of the second flexible member interface 2230, as indicated by arrow 12 in Fig. 11A. The second interface member 2540 may be moved into the lock portion 2236, for example by sliding the second interface member 2540 through the tapered transition portion 2234 and into the lock portion 2236, with the first interface portion 2542 disposed internal to the side wall 2110 of the rail 2001, i.e. between the rail and the helmet shell 105, and the second interface portion 2544 disposed external to the side wall 2110. When the second interface member 2540 is moved from the receiver portion 2542 and into the lock portion 2236, the portion of the rail 2001 surrounding the locking portion 2236 is captured in the groove 2546 to hold the second interface member 2540, thereby removably attaching the second flexible member assembly 2501 to the rail 2001.

The second flexible member assembly 2501 can be removed from the rail 2001 by sliding the rail interface member 2540 into the receiver opening 2232 and removing it from the receiver opening, for example by moving it laterally out of the receiver opening.

Referring now to Figs. 12 through 14C, a third embodiment of a flexible member attachment interface 2260, also known herein as a third attachment interface 2260, is configured for removably attaching a third flexible member assembly 2503 to the rail 2000. The third flexible member assembly 2503 includes a flexible member 2510, a third coupling member 2560, also referred to herein as a snap coupling member 2560, disposed on a proximal end of the flexible member 2510, and may include a connector 2530 disposed on a distal end of the flexible member 2510.

The third attachment interface 2260 may be disposed on the outer wall 2110 of the rail 2000, near the front portion 2005. The third attachment interface 2260 includes an opening 2262 through the outer wall 2110. The opening 2262 may be configured as a receiver opening or assembly portion of the third attachment interface 2260 for receiving the third coupling member 2560 and loading it into the third attachment interface. The third attachment interface 2260 further includes a lock portion 2266 for releasably locking the third coupling member 2560 in the third attachment interface 2260 and a transition portion 2264 disposed between the receiver opening 2262 and the lock portion 2266 for translating the third rail coupling member from the receiver opening 2262 and into the lock portion 2266.

The lock portion 2266 may include a lock cavity 2268 extending from the transition portion 2264 toward the helmet facing surface 2212 of the rail 2000. The lock cavity 2268 may be configured to receive and constrain a portion of the third coupling member 2560. The lock portion 2266 may further include one or more, for example two, indents 2267 formed on opposing side walls 2265 of the lock cavity 2268. The indents 2267 extend laterally outward from the lock cavity 2268. The indents 2267 may each be configured to receive and constrain a protrusion or boss extending from the third coupling member 2560. The indents 2267 and at least a portion of the lock cavity 2268 are disposed under the outer surface 2110 of the rail 2000, as indicated by dashed lines in Fig. 12. In some embodiments, the third attachment interface 2260 may be configured without indents 2267.

The third attachment interface 2260 may further include a rear surface 2269 for limiting rotation of the third coupling member 2560 within the cavity 2268. The rear surface 2269 may be formed as a sloped wall extending from the opening 2262 toward the helmet facing surface 2212. The third attachment interface 2260 may include a relief portion 2263 configured as an indentation extending into the outer surface 2110 of the rail for housing a portion of the flexible member 2510 when the third flexible member assembly 2503 is attached to the rail 2000. In some embodiments, the relief portion 2263 may be optional.

The third coupling member 2560 includes a boss 2568 for interfacing with the lock cavity 2268. The third coupling member 2560 includes one or more, for example two, protrusions 2567, each extending from a lateral wall 2565 of the third coupling member 2560. The protrusions 2567 are for interfacing with indents 2267 of the lock portion 2266 to releasable lock the third coupling member 2560 in the third attachment interface 2260. The third coupling member includes a rear face 2569 that may interface with the rear face 2269 of the third attachment interface 2260 when the third coupling member 2560 is seated in the third attachment interface, as shown in Figs. 13 and 14C.

Referring to Figs. 14A through 14C, the rail coupling member 2560 may be assembled into the receiver opening 2262, i.e. through the loading portion, and into the transition portion 2264 of the third attachment interface 2260 as indicated by arrow 50 in Fig. 14A. When the third rail coupling member 2560 is partially seated in the lock portion 2260, with the boss 2568 partially disposed within the cavity 2268, the third rail coupling member 2560 may be rotated downward, i.e. toward the outer surface 2110 of the rail 2000, as indicated by arrow 51 of Fig. 14B. As the third rail coupling member 2560 is rotated downward into the third attachment interface 2260, the boss 2560 translates further into the cavity 2268, as indicated by arrow 52 in Fig. 14B.

In embodiments, the third coupling member 2560 includes a snap lock feature for coupling attaching the third coupling member to the third attachment interface 2260. In examples, when the third coupling member 2560 is seated in the lock portion 2266, as shown in Fig. 14C, the protrusions 2567 are disposed in the indents 2267 and the boss 2568 is seated in the lock cavity 2268 to releasably lock the third coupling member 2560 to the rail 2000. In embodiments, the protrusions 2567 snap into the indents 2267, which may provide a user with a tactile and/or auditory indication that the third coupling member 2560 is locked in the third attachment interface 2260. In an example, the protrusions 2567 are configured to have an interference fit with the side walls 2265 of the third attachment interface. The protrusions 2567 may partially deform while the third coupling body 2560 is being rotated into the lock portion, as indicated by arrow 51, and may at least partially rebound when they interface with the indents 2267 to provide the snap fit. In other embodiments, the protrusions are configured to reduce movement of the third coupling member 2560 relative to the third attachment interface 2260.

When the third coupling member 2560 is locked in the third attachment interface 2260, a top surface 2563 of the third coupling member may be flush with an outer surface 2110 of the rail 200, for example the top surface 2563 may be coincident, or substantially coincident, with the outer surface 2110 of the rail 2000, which is advantageous for preventing snags and for avoiding interfering with accessories that may be coupled to the rail 2000. The third coupling member 2560 may not be dislodged from the third attachment interface 2260 by force applied to the flexible member 2510 or to a connector 2530 connected there to, including force that tends to pull the flexible member rearward or toward the third attachment interface 2260, as indicated by arrow 53 in Fig. 14C. When the third coupling member 2560 is disposed in the lock portion 2268, tension applied to the flexible member 2510 may tend to pull the third coupling member 2560 into the lock cavity 2236 so that the flexible member assembly 2501 remains coupled to the third attachment interface 2260. The third coupling member 2560 may be removed from the third attachment interface 2260 in an example by inserting a tool, for example a screw driver or the like, between the third coupling member and the third attachment interface, for example the rear surface 2269, and prying the third coupling member out of the attachment interface.

It is noted that a paired attachment interface 2261 is substantially similar to the third attachment interface 2260. A third coupling body 2560 or a third flexible member assembly 2503 or of a double-ended flexible member assembly 2505 may be removably coupled to a paired attachment interface 2261 in a similar manner as described herein in relation to a third attachment interface 2260. (See Figure 2.)

Referring to Fig. 15, an embodiment of a shroud 1005 may include one or more flexible member attachment interfaces, for example one or more first attachment interfaces 2220, each for removably attaching a flexible member assembly, for example 2500, to the shroud 1005. The one or more flexible member interfaces 2220 may be formed on a front surface 1247 of the shroud. In another example an insert 1060 formed with an embodiment of a third attachment interface 2260 disposed thereupon may be assembled into an aperture 1048 of the shroud 1005 for providing an attachment point for a third flexible member assembly 2503.

In one example, one or more flexible member assemblies, for example 2500, 2505, and/or 2503, may be attached to the shroud 1005 and then clipped onto an accessory device, for example a helmet mount or a vision device attached to a helmet mount (not shown), that is attached to the shroud 1005 to provide support to the accessory device. This is particularly useful on embodiments of helmet systems, e.g. 103, that may not include rails 2000 or that may not include flexible members, e.g. bungees, attached to rails for supporting the accessory device. One or more flexible member assemblies may be attached to and removed from the shroud 1005, including replacing a first type of flexible member assembly with a second type of flexible member assembly.

In an alternative embodiment of a shroud, one or more second flexible member interfaces 2230 and/or third flexible member interface 2260 or 2261 may be formed on the shroud 1005 for removably attaching one or more second flexible member assemblies 2501 and or third flexible member assemblies to the shroud. In further examples one or more flexible member interfaces may be formed or added to other surfaces, mounts, or objects included in the helmet system 103, for example on the helmet shell 105, a portion of a mandible guard assembly 3000, for example an arm 3200 or mandible guard 3100, or an eye protection device or assembly, for example a visor assembly 4200.

Removable flexible member assemblies 2500, 2501, 2503, and 2505, for example removable bungee assemblies, according to the technology disclosed herein provide multiple advantages. For example, a user can add or remove one or more flexible members to a helmet system, e.g. 103, either to mount, for example to a rail 2000 or 2001 or to a shroud 1005, as desired depending on, for example, the needs of a particular mission, for example a desire to stabilize an object attached to the shroud 1005 or to another embodiment of a shroud, e.g. shroud 1000 or 1001. A user can remove one or more flexible member assemblies from a helmet system if they are not needed, can replace a damaged flexible member assembly with a new flexible member assembly, or replace a first flexible member assembly with a second flexible member assembly.

Referring to Fig. 1, 2, and 3A, embodiments of rail 2000 include a strap interface 2150 for receiving a strap attachment member 4252. The strap attachment member 4252 is attached to a distal end of a strap 4250 that is attached to an eye protection object, for example a visor assembly 4200 or googles (not shown), where the strap 4250 is for providing support to the visor or goggles, for example during a jump mission. The strap attachment member 4252 may be substantially similar to the second interface member 2540 discussed previously in relation to Figs. 11A through 11C. The strap interface 2150 includes a lock portion that is substantially similar to the lock portion 2236 of the second flexible member interface 2230 and includes a tapered portion extending radially outward from the lock portion. The strap attachment member 4252 may be assembled into the lock portion of the strap interface 2150 through the tapered portion, in a manner similar to that described in relation to the second rail interface member 2540 and second flexible member interface 2230.

### 6.1.4 Task light mount

Referring to Figs. 16 through 18, a task light mount 2700 may be attached to a rail, e.g. 2000 or 2001, for example by attaching the task light mount 2700 to an accessory interface 2330 that is attached to the rail. The task light mount 2700 may be attached to the accessory interface 2330 with a fastener 2750, for example a threaded fastener. The task light 2800 includes multiple feet 2810 for attaching to the task light mount 2700. In an embodiment, the task light 2800 includes two feet 2810 that extend from a bottom surface of the task light. Each foot 2810 includes a tab 2812 that extends radially outward at a distal end of the foot.

The task light mount 2700 includes a housing 2710. The housing 2710 includes an outer wall 2712 that at least partially encloses a housing interior 2713, disposed within the housing. The housing 2710 includes two radial grooves 2716 and two assembly openings 2714 passing through an outer wall 2712 of the housing. Each assembly opening 2714 is contiguous with a groove 2716 such that the assembly opening 2714 and the groove 2716 form a single opening through the outer wall 2712 of the housing 2710.

Each assembly opening 2714 is shaped to receive a tab portion 2812 of a foot 2810, allowing the tab portion 2812 to pass through the outer wall 2712 and into the housing interior 2713. Each groove 2716 is sized and shaped to retain the tab portion 2812 within the housing interior 2713, e.g. between the outer wall 2712 and the accessory interface 2330 to which the task light mount 2700 is attached. The task light mount 2700 includes a lock plate 2720 and a pin 2730 for attaching the lock plate 2720 to the housing 2710. The lock plate 2720 may rotate relative to the pin 2730. The lock plate 2720 includes a lever 2722 and two lock protrusions 2724.

The lock plate 2720 has a locked configuration for holding the task light 2800 on the task light mount 2700 and an unlocked configuration for releasing the task light 2800 from the task light mount 2700. The task light mount 2700 includes one or more urging members 2740, for example one or more task light springs, for example one or more torsion springs, for urging the lock plate 2720 into the locked configuration.

When the lock plate 2720 is in the locked configuration, each lock protrusion 2724 blocks a corresponding assembly opening 2714, and in some embodiments a portion of the groove 2716 that is associated with the assembly opening, as shown in Fig. 17. When a task light 2800 is attached to the task light mount 2700, the lock protrusions 2724 prevent the feet 2810 from traveling through the groove 2716 to the assembly opening 2714, so that the task light 2800 cannot be disassembled from the task light mount 2700.

A user can attach a task light 2800 to the task light mount 2700 by aligning the feet 2810 with the assembly openings 2714 and pushing the task light towards the task light mount. The feet 2810 push against the lock protrusions 2724 of the lock plate 2720 to overcome the urging force provided by the urging members 2740, which allows the lock plate 2720 to rotate relative to the pin 2730 to move the lock protrusions 2724 out of the assembly openings 2714. The feet 2810 can then pass through the assembly openings 2714 into the interior of the housing 2710. The user then may rotate the task light 2800 so that the feet 2810 travel within the grooves 2716 until they move off of the lock protrusions 2724. The urging members 2740 urge the lock protrusions 2724 back into the assembly openings 2714, and a portion of the grooves 2716, such that the lock plate 2720 is in the locked configuration and the task light 2800 is locked onto the task light mount 2700.

A user may move the lock plate 2720 into an unlocked configuration by actuating the lever 2722, as indicated by arrow 14 in Fig. 17. The user can pull on the lever 2722 to overcome the urging force provided by the urging members 2740 and move the lock protrusions 2724 out of the assembly openings 2714. The user then can rotate the task light 2800 until the feet 2810 are aligned with the assembly openings 2714 and remove the task light 2800 from the task light mount 2700.

The task light mount 2700 provides a number of advantages. A user can assemble a task light 2800 onto the mount 2700 and remove the task light with a simple twisting motion. The task light mount 2700 automatically locks the task light onto the mount without requiring a user to interact with an actuator or the like. When the task light 2800 is assembled onto the task light mount 2700 it is held securely in place until a user operates an actuator to release the task light from the task light mount.

### 6.1.5 Interface Adapter

Referring to Figs. 1, 2, 3A and 3B, for example, embodiments of the rail 2000 include removable and replaceable adapters, e.g. 2300. Referring to Fig. 3A, a front portion 2005 of a rail 2000 includes an adapter interface 2190. The adapter interface 2190 includes an inset 2191 for receiving an adapter 2300. The inset 2191 includes a surface that is offset inward, i.e. toward a helmet facing surface of the rail 2000, from the side wall 2110. The inset 2191 is shaped to receive the adapter 2300.

The adapter interface 2190 includes a first rail fastener opening 2160 for receiving a fastener, 2550, for attaching the adapter to the rail. In some embodiments, the adapter interface 2190 includes a stabilizer receptacle 2192 for receiving a stabilizer protrusion 2342 of an adapter 2300 to prevent rotation and translation of the adapter relative to the rail. Each adapter 2300 includes an adapter fastener opening 2310 passing through a portion of the adapter for receiving the fastener. The fastener 2550 may pass through the adapter fastener opening 2310 and the first rail fastener opening 2160. The fastener 2550 may be assembled into a rail mounting hole (not shown) on the helmet shell 105 to attach the adapter 2300 and the rail 2000 to the helmet system 103. In some embodiments, the fastener 2550 may also attach a portion of a harness and/or fit system 210/212 to the helmet shell 205.

The adapter 2300 includes an object assembly interface 2320 for attaching an object, for example the mandible guard assembly 3000 including a mandible guard 3100, to the helmet system 103. The object assembly interface 2320 may be referred to herein as a mandible assembly interface however, it is not so limited. The object or mandible assembly interface 2320 may be used to attach other objects to the helmet system 103, for example to attach a visor, a vision device, or other accessory device to the helmet system.

In embodiments, for example as may be seen in Figs. 3B, 6, and 13, the object or mandible assembly interface 2320 may include one or more receptacles for engaging with corresponding engagement features of objects, for example mandible guard assembly 3000 (see Fig. 1), that may be removably attached to an assembly interface. These receptacles may include an attachment hook receptacle 2322 for interfacing with a hook portion of a hook engagement feature (not shown) and a lock tooth receptacle 2324 for engaging with a locking engagement feature (not shown).

An accessory interface 2330 is attachable to a rear, helmet facing surface 2212 of the rail 2000. When attached to the rail 2000, with the rail disposed on an outer surface 117, for example left side surface 114 or right side surface 116, the accessory interface 2330 is partially disposed between the rail and the outer surface.

The accessory interface 2330 has one or more rail interface members 2334 extending from a bottom surface of the accessory interface. The one or more rail interface members 2334 are configured to be disposed between the rail 2000 and the helmet shell. The rail includes one or more interface receptacles 2034 disposed on the helmet facing surface 2212 of the rail 2000 to receive the one or more rail interface members 2234 to secure the accessory interface 2330 to the rail 2000. The accessory interface 2330 includes an accessory mount 2332 for attaching an accessory device to the accessory interface. In embodiments, the accessory mount 2332 includes an adapter, for example a threaded adapter, to receive a connector, for example a threaded connector, for attaching an accessory device to the accessory interface. In embodiments the accessory adapter 2330 may be used to attach a task light mount 2700, a vision system interface 2850, or other accessory or accessory mount to the helmet system 103. The accessory interface 2330 may be added or removed to advantageously enable configuration and reconfiguration of the helmet system 103.

Embodiments of an adapter 2300 may include more than two interfaces. For example, a second adapter (not shown) may include a mandible assembly interface 2320 and a visor interface.

A first adapter, e.g. 2300, can be removed from the rail 2000 and be replaced by a second adapter or a rail 2000 may not include an adapter 2300, enabling customization of the rail 2000 to interface with different accessories. For example, a first adapter 2300 with a mandible assembly interface 2320 can be removed and replaced by a second adapter with a visor interface. The rail 2000 may be configured with or without and an accessory interface 2330.

### 6.1.6 Rail, Bungee, and Accessory

Referring to Fig. 19, an embodiment of the helmet system 103 includes a helmet shell 105, a rail 2000 attached to a side surface 114 of the helmet shell, and a shroud 1000 attached to a front surface of the helmet shell. The shroud includes a frame 1205 attached to the helmet shell and a plate 1400 attached to the frame. A helmet mount 140 for attaching an accessory device is attached to the shroud. An accessory device 150 is attached to the helmet mount 140. The helmet mount 140 includes a lock plate 142 that is attached to the plate 1400.

The rail 2000 includes a flexible member attachment interface, for example first attachment interface 2220, to which a flexible member assembly, e.g. a first flexible member assembly 2500, is attached. The first flexible member assembly 2500 includes a flexible member 2510, a rail coupling member, for example rail coupling member 2520, disposed on a proximal end of the flexible member and removably assembled on the flexible member attachment interface 2200, and a connector element 2530 disposed on distal end of the flexible member. A second rail 2000 with a second flexible member interface 2220 and a second flexible member assembly 2500 assembled onto the second flexible member interface may be attached to a second side of the helmet 116 (not shown) that opposes the first side. It is noted that in embodiments, either of the second flexible member assembly 2501 or the third flexible member assembly 2503 may be substituted for the first flexible member assembly 2500 and that the rail 2000 may include a corresponding second attachment interface 2230 or third attachment interface 2260 or 2261. Although not shown, a second rail 2000 may be coupled to an opposing side of the helmet shell 105, for example to the right side 116, and may include an attachment interface and corresponding flexible member assembly removably coupled to the attachment interface.

When the helmet mount 140 and accessory 150 are attached to the shroud 1000, a user may attach a connector element 2530 of one or more flexible member assemblies, for example 2500, 2501, or 2503, to one or more of the helmet mount 140 and the accessory device 150. A first connector element 2530 may be hooked onto or otherwise attached to a hooking receptacle 148 or another portion of the helmet mount 140. Alternatively, or in addition, a connector member 2530 may be hooked onto or otherwise connected to a hooking receptacle 152 of the accessory device 150 or otherwise attached to the accessory device, for example by wrapping a portion of a flexible member 2510 around a portion of the accessory device. One or more flexible element assemblies, for example 2500, 2501, or 2503, may be attached to one or both of the helmet mount 140 and the accessory device 150 to provide stability, for example to the accessory device 150, when it is attached to the helmet system 150, either in an in-use or in a stowed position, for example by exerting a stabilizing force when a flexible member 2510 is stretched to attach a corresponding connector member 2530 to the accessory 150 or the helmet mount 140.

### 6.1.7 Mandible Guard Assembly

Referring to Figs. 1, 20, and 21, embodiments of the helmet system 103 include a mandible guard assembly 3000 that can be attached to and removed from the helmet system 103. The helmet system may include adapters 2300, for example two adapters, for attaching the mandible guard assembly 3000 to the helmet shell 105. Each adapter 2300 may include an interface 2320, for example an interface for attaching an object, for example the mandible guard 3000, to the helmet system. The mandible guard assembly 3000 includes a mandible guard 3100, two arms 3200, and two mandible guard interface members 3530 which each are for attaching an arm 3200 to the mandible guard 3100.

Each mandible guard interface member 3530 is attached to the mandible guard 3100 with one or more fasteners, for example with two fasteners 3550, each of which may be a threaded fastener, for example a bolt or the like, or a non-threaded fastener. A fastener 3550 may be assembled through an adjustment groove 3534 of a mandible interface member 3530, and through a mandible guard through hole 3110 of the mandible guard 3100 for attaching the mandible interface member 3530 to the mandible guard 3100. In some embodiments, a threaded portion of a mandible guard fastener 3550 may interface with a threaded portion of a corresponding fastener receiver 3552. A mandible guard interface member 3530 includes an adjustment groove 3534 for assembling each fastener 3550 through the interface member to attach the mandible guard 3100 to the mandible guard interface member. The adjustment grooves are elongated to enable a fastener 3550 to translate relative to the groove for adjusting a position of the mandible guard relative to an arm 3200. The adjustment grooves 3534 may be formed as oblong through holes that enable the mandible guard fasteners 3550 to be translated within the adjustment grooves 3534 before the mandible guard fasteners 3550 are tightened down to hold the mandible guard 3100 in place relative to the arm interface member 3530. In an embodiment, the mandible guard may be adjusted fore and aft relative to the mandible arm, as indicated by arrow 16 in Fig. 20. In some embodiments, the adjustment grooves 3534 provide approximately 4mm of travel, for example between 2mm and 6mm of travel, of the mandible guard 3100 relative to the arm interface member 3530. This enables a user to customize a fit of the mandible guard 3100 when it is attached to the helmet system 103.

As shown, each adapter 2300 is attached to a rail 2000. However, in some embodiments (not shown) the adapters 2300 are attached directly to the helmet shell 105, for example on a helmet system that does not include rails 2000. In either case, the adapters 2300 are each disposed on a side surface (114 or 116) of the helmet shell 105, either directly to the helmet shell 105 or in cooperation with a rail 2000, on a front portion of the helmet shell, for example near a front surface 110 of the helmet shell 105. Each adapter 2300 includes an interface for attaching an object to the adapter, for example a mandible assembly interface 2320 for attaching a portion of a mandible guard assembly 3100 to the adapter.

Each arm 3200 includes an adapter interface 3400 for attaching the mandible assembly 3000 to the helmet system 103. Each adapter interface 3400 is adapted to be removably attached to a mandible assembly interface 2320 of an adapter, e.g. 2300. Each adapter interface 3400 can be assembled onto a corresponding mandible assembly interface 2320 by assembling the adapter interface 3400 onto the mandible assembly interface 2320. The adapter interface 3400 automatically transitions to a locked configuration when it is fully assembled into a corresponding mandible assembly interface 2320. This automatic lock in place feature of the mandible guard assembly 3000 advantageously allows a user to attach the mandible assembly 3000 to the helmet system 103 without requiring the user to interact with an actuator, lever, or the like, thereby facilitating one or two handed attachment of the mandible assembly to the helmet system.

As shown in Fig. 20, a user can remove the mandible assembly 3000 from the helmet system by pressing on two release actuators 3434, as indicated by open arrows 18A and 18B. When the release actuators 3434 are pressed inward toward the helmet shell 105, the adapter interface 3400 disengages from the mandible assembly interface 2320. A user can then remove the mandible assembly 3000 from the helmet system 103, for example by rotating the adapter interfaces 3400 out of the mandible assembly interfaces 2320. The user must push both release actuators 3434 to remove the mandible assembly 3000 from the helmet system 103 which is advantageous for preventing accidental dislodgement of the mandible assembly.

Referring now to Figs. 20 through 25C, each arm 3200 includes an adapter interface 3400 disposed at a proximal end 3210 of the arm, i.e. at a first end of the arm that is closest to an adapter 2300 when the mandible assembly 3000 is attached to a helmet system 103. Each adapter interface 3400 includes an attachment lock opening 3410 that passes through a thickness of the arm and an attachment hook 3420 formed on the proximal end of the arm. The attachment hook 3420 is for assembling into an attachment hook interface 2322 of a mandible assembly interface 2320. Each adapter interface 3400 includes an attachment lock 3430 that is assembled into the attachment lock opening 3410, a pin 3436 for attaching the attachment lock 3430 to the arm 3200 at the attachment lock opening 3410, and an urging member, for example a mandible lock spring 3438, for example a torsion spring, for urging the attachment lock into a locked configuration. The attachment lock 3430 includes a lock tooth 3432 for interfacing with a lock tooth receptacle 2324 of a corresponding mandible assembly interface 2320, and a release actuator 3434. In some example embodiments, the attachment lock 3430 may be formed from a plastic material, for example from a nylon, glass filled nylon, or ABS. In some example embodiments, the attachment lock 3430 may be formed from a metal, for example aluminum, an aluminum alloy, or stainless steel.

Each arm 3200 includes a mandible groove 3510 and a partially threaded fastener opening 3520 disposed on a distal end of the arm, i.e. on a second end of the arm that is furthest from an adapter 2300 when the mandible assembly 3000 is attached to a helmet system 103. The mandible groove 3510 and partially threaded fastener opening 3520 are for attaching the arm 3200 to a mandible guard interface assembly 3500.

In some example embodiments (see Figs. 22A and 22B, for example), an arm 3200 is formed with a core member 3230 over molded with a molded portion 3240. In these embodiments, a mandible guard attachment portion 3235 of the core member 3230 may extend from a bottom surface 3225 of the molded portion and toward the distal end 3220 of the arm. The mandible guard attachment portion 3235 includes the mandible groove 3510 and partially threaded fastener opening 3520, each of which are formed as through holes that pass through the core member 3230. The attachment hook 3420 and attachment lock opening 3410 are formed on the molded portion 3400.

The core member 3230 may be fabricated from a metal, for example stamped or machined steel, for example stainless steel, or aluminum, or an aluminum alloy to provide extra strength to the arm 3200. The molded portion 3240 may be formed from a polymer or composite, for example from a pressure molded carbon fiber composite, nylon, or glass filled nylon material. An arm 3200 formed with a metal core member 3230 provides a number of advantages, e.g. as compared to a known injection molded arm. For example, the arm provides increased strength and resistance to movement or deformation of the mandible assembly under load, for example when a force is exerted on the mandible guard 3100, to better protect a user of the helmet system 103. In addition, the mandible guard attachment portion 3235 of the arm 3200 is made from metal, which provides strength and contributes to making the mandible interface assembly 3500 more robust than it would be if formed from plastic or other non-metal components.

Each mandible guard interface assembly 3500 includes a mandible guard interface member 3530, a drop down actuator 3540, an urging member, for example a mandible drop down spring 3546, for example a compression spring, for urging the drop down actuator 3540 into a locked configuration, a partially threaded fastener 3522 for attaching the mandible guard interface member 3530 to the arm 3200 and for attaching the drop down actuator 3540 to the mandible guard interface member 3530, one or more mandible fasteners 3550 for attaching the mandible guard interface member 3530 to the mandible guard 3100, and one or more fastener receivers 3552, each for interfacing with a corresponding mandible fastener 3550 to attach the mandible guard interface member 3530 to the mandible guard 3100. In an alternative embodiment, the mandible guard 3100 and mandible guard interface member 3530 may be formed as a single element, e.g. an embodiment of a mandible guard 3100 may include features of the mandible guard interface member 3530, for example for connecting with the mandible guard attachment portion 3235 of the arm 3200 and with the drop down actuator 3540.

Referring now to Figs. 23 through 25C, an adapter interface 3400 can be assembled onto a mandible assembly interface of an adapter 2300. The mandible assembly interface 2320 includes an attachment hook receptacle 2322 formed as a pocket for receiving an attachment hook 3420 by enabling rotation of the attachment hook relative to the attachment hook receptacle 2322 and the mandible assembly interface 2320. The mandible interface assembly includes a lock tooth receptacle 2324 formed as an opening or cavity in the adapter for receiving a corresponding locking portion of the adapter interface.

The attachment hook 3420 may be assembled into the attachment hook receptacle 2322 of the mandible assembly interface 2320 to partially attach the mandible assembly 3000 to an adapter 2300, as indicated by arrow 19 in Fig. 23 and arrow 20 in Fig. 25A. The arm 3200 may be rotated to align the lock tooth 3432 with the lock tooth receptacle 2324 of the mandible assembly interface 2320, as indicated by arrow 21 of Fig. 25B.

When the lock tooth 3432 is aligned with the lock tooth receptacle 2324, the mandible lock spring 3438 urges the attachment lock 3430 into a locked configuration in which the lock tooth 3432 is engaged with the lock tooth receptacle 2324, thereby locking the adapter interface 3400 onto the mandible assembly interface 2320 of the adapter 2300, as shown for example in Figs. 24 and 25C, to securely fasten the mandible assembly 3000 to the adapter 2300. When the mandible interface 3400 is locked onto the mandible assembly interface 2320, a top surface 3425 of the mandible arm 3200 may abut an upper surface 2325 of the mandible assembly interface 2320, as may be seen, for example, in Fig. 25A. The interface of the top surface 3425 of the mandible arm and the upper surface 2325 of the mandible assembly interface 2320 may resist rotation of the mandible interface 3400 relative to the mandible assembly interface 2320, for example when the mandible guard 3100 is impacted with a force directed toward a wearer, thereby preventing or resisting travel of the mandible guard 3100 toward the wearer's face.

A user can push on the release actuator 3434 (see Fig. 20) to overcome the urging force provided by the mandible lock spring 3438 and disengage the lock tooth 3432 from the lock tooth receptacle 2324, thereby transitioning the attachment lock 3430 into an unlocked configuration. The adapter interface 3400 can be disengaged from the mandible assembly interface 2320 when the attachment lock 3430 is in the unlocked configuration. When both adapter interfaces 3400 are disengaged from both adapters 2300, the mandible assembly 3000 can be removed from the helmet system 103. In some embodiments, a user must disengage both adapter interfaces 3400 from both adapters 2300 to remove the mandible assembly 3000 from the helmet system 103.

Referring to Fig. 25C, when a rearward directed force, indicated by arrow F1 is applied to the mandible guard 3100, the adapter interface 3400 tends to rotate relative to the mandible assembly interface 2320, as indicated by arrow 22. Rotation is prevented by engagement of the lock tooth 3432 with the lock tooth receptacle 2324, which is held in a locked configuration by one or more urging members 3438. However, when a force F1, indicated by arrow 57, greater than a threshold amount is applied to the mandible guard 3100 in a direction away from a wearer's face, the adapter interface 3400 may be dislodged from the mandible assembly interface 2320. In examples, a locking force provided by the urging member may be overcome, thereby disengaging the lock tooth 3432 from the lock tooth receptacle 2324, enabling the mandible guard assembly 3100 to be pulled from the helmet system 103. In some embodiments, a force F1 of approximately 35 pounds, for example between 30 and 40 pounds, may enable the mandible guard assembly 3000 to be removed. In some example embodiments, the mandible guard assembly 3000 may be removed when a force F1 less than 35 pounds is applied, for example a force of 20 pounds, for example 20 to 25 pounds, or 20 to 35 pounds. This arrangement provides a number of advantages, including enabling a user to quickly remove the mandible guard assembly 3000 without needing to operate the release actuators 3434, for example to enable a user to dislodge the mandible guard assembly 3000 quickly, or for the mandible guard assembly 3000 to dislodge when grasped by another person, for example an opponent, or caught on a snag hazard, for example a branch or other obstacle, which may protect the user from forces that may otherwise be transmitted through the mandible guard assembly 3000.

Referring now to Figs. 21 and 26 through 27C, the mandible guard assembly 3000 includes a drop down mechanism that allows a user to lower the mandible guard 3100 while the mandible guard assembly 3000 is attached to the helmet assembly, for example to expose a lower portion of the user's face 310, as shown in Fig. 26. The mandible guard interface members 3530 each include a cover 3531. The cover 3531 is removed in Figs. 27A through 27C to better show components of the drop down mechanism.

When both drop down actuators 3540 are pushed forward, i.e. toward a front of the mandible guard assembly 3000 (as indicated by straight arrow 24 in Fig. 26 and arrow 27 in Fig 27B), the mandible guard 3100, and attached mandible guard interface members 3530, may rotate relative to the arm 3200 to drop down, as shown in Figs. 26 and 27C and indicated by arrows 25 and 28.

Referring now to Figs. 21, 22A, 22B and 27A through 27C, the mandible guard attachment portion 3235 of the arm 3200 includes a mandible groove 3510. The mandible groove 3510 passes through the arm 3200 to form an opening in the arm. The mandible groove 3510 may be formed as an L-shaped groove having a first groove arm 3515 and a second groove arm 3517 extending from the first groove arm. The second groove arm 3517 may extend perpendicularly from the first groove arm 3515 or at an acute angle, for example between 45 degrees and 90 degrees or between 60 degrees and 90 degrees from the first groove arm. The first groove arm 3515 may be substantially straight and extend from a lock portion 3514 at a proximal end to an unlock portion 3513 at a distal end of the first groove arm. The second groove arm 3517 may extend from the unlock portion 3513 at the distal end of the first groove arm 3515 and a proximal end of the second groove arm 3517 to a drop down portion 3512 at a distal end of the second groove arm. The second groove arm 3517 may curve along its length with a radius of curvature concentric with the partially threaded fastener opening 3520.

Referring in particular to Figs. 21 and 27A through 27C, the drop down actuator 3434 may be assembled onto the arm 3200 with the drop down actuator protrusion 3544 disposed within mandible groove 3510. The partially threaded fastener 3522 may be assembled through the fastener opening 3520 of the arm and through the actuator fastener groove 3542 of the drop down actuator 3434 and attached to a threaded opening 3532 of the rear cover 3531 of mandible interface member 3530 (see Fig. 21), or to threads of the fastener opening 3520 in some embodiments, to attach the arm 3200 to the mandible interface member 3530 and to secure the drop down actuator 3540 within the mandible interface assembly 3500 with the drop down actuator protrusion 3544 disposed within the mandible groove 3510, as shown for example in 27A through 27C.

The drop down actuator protrusion 3544 is disposed in the mandible groove 3510 and moves within the mandible groove 3510 as the drop down actuator 3540 moves relative to the mandible interface member 3530. When the drop down actuator protrusion 3544 is disposed in the lock portion 3514 of the mandible groove 3510, the top surface 3535 of the mandible interface member 3530 is drawn against the bottom surface 3225 of the molded portion 3240 of the arm 3200, as shown, for example, in Fig. 27A. The drop down spring 3546 urges the drop down actuator 3540 into a locked configuration wherein the drop down actuator protrusion 3544 is maintained within the lock portion 3514, as indicated by straight arrow 26 in Fig. 27A.

When a user pushes on the drop down actuator 3540, as indicated, for example, by straight arrows 24 in Fig. 26 and 26 in Fig. 27A, the user may overcome the locking force provided by the drop down spring 3546. The drop down actuator protrusion 3544 can then translate relative to the mandible groove 3510 from the lock portion 3514, through the first groove arm 3515, and to the unlock portion 3513. The drop down actuator protrusion 3544 may then translate into the second groove arm 3517 wherein it may translate freely between the unlock portion 3513 and the drop down portion 3512, thereby urging the top surface 3535 of the mandible interface member 3530 away from the bottom surface 3225 of the molded portion 3240 of the arm 3200, as indicated by a curved arrow 28 in Fig. 27C. When drop down actuator protrusion 3544 translates into the drop down portion 3512, the mandible guard 3100 translates into a dropped down position relative to the arm 3200, as shown in Fig. 26. In one or more embodiments, a user must push on both drop down actuators 3540 to move the mandible guard 3100 into the dropped down position. This provides a number of advantages, including preventing accidental release of the drop down feature when one drop down actuator is inadvertently actuated.

The mandible guard 3100 is locked in place relative to the arm 3200 when it is in the raised position, as shown for example in Figs. 1 and 20. In some embodiments, the mandible guard 3100 is not locked in place when it is in a dropped down position, as seen for example in Figs. 26 and 27C. A user can return the mandible guard 3100 to the raised position by pushing the mandible guard 3100 upwards, i.e. so that the top surface 3535 of the mandible interface member 3530 moves toward the bottom surface 3225 of the molded portion 3240 of the arm 3200, in a direction opposite that indicated by the curved arrow 25 in Fig. 26 and arrow 28 in Fig. 27C.

As the mandible guard 3100 translates upward, the drop down actuator protrusion 3544 translates within the mandible groove 3510 until it reaches the unlock portion 3513. When the drop down protrusion 3544 is positioned in the unlock portion 3513 and no compressive force is applied to the drop down actuator 3540, an urging member, for example the one or more drop down springs 3546, urges the drop down actuator protrusion 3544 towards the lock portion 3514, forcing the drop down actuator 3540 towards its lock configuration. The user can move the mandible guard 3100 upward until the protrusion 3544 travels into the lock portion 3514 of the mandible groove 3510 at which point the urging member(s) urge the drop down actuator into the locked configuration. This provides a number of advantages, including enabling a user to return the mandible guard 3100 to the raised position, and the drop down actuator 3540 to its locked configuration, without needing to interact with an actuator or the like.

Referring to Figs. 26 and 27C, in some embodiments, the mandible guard interface members 3530 are configured to drop down with a maximum opening angle 3590 of 35 degrees between a lower surface 3225 of the molded portion 3240 of the arm 3200 and a top surface 3535 of the mandible guard interface member 3530. In some embodiments, the opening angle 3590 may range from 5 to 35 degrees, for example greater than 5 degrees or greater than 30 degrees. In some embodiments, when the protrusion 3544 is disposed in the lock portion 3514 of the mandible groove 3510, the opening angle 3590 is approximately 0 degrees, for example 0 degrees plus or minus one degrees or 0 degrees plus or minus up to 2 degrees through 5 degrees, wherein the top surface 3535 of the mandible interface member 3530 is substantially parallel to the bottom surface 3225 of the molded portion 3240 of the arm 3200.

Referring now to Fig. 28A, in embodiments, the mandible guard 3100 may be attached to an adapter 2300 with a rigid mandible arm 3202 that does not include a drop down feature. Referring to Fig. 28B, the mandible guard 3100 may be attached to the adapter 2300 with a swing arm 3203 that includes a hinge joint 3204. The hinge joint 3204 may enable the mandible guard to rotate relative to the swing arm 3203 around hinge axis 3207 to, for example, rotate away from a user's face when one swing arm 3203 of a mandible guard assembly is detached from an adapter. In these embodiments, a user can disengage an adapter interface 3400 of a first arm 3200 from a corresponding mandible assembly interface 2320 and rotate the mandible guard 3100 relative to a second arm to move the mandible guard away from a user's face. The rigid mandible arm 3202 and swing arm 3203 may each include an adapter interface 3400 for releasably engaging with an assembly interface 2320 of an adapter 2300, as described herein.

In further embodiments, other objects may be releasably attached to one or more adapters 2300. For example, as shown in Fig. 29, a visor 3150 may be releasably attached to an adapter 2300. A visor arm 3206 is attached to the visor 3150 at a first end of the arm, for example with one or more, for example two, fasteners 3209. A second end of the visor arm 3206 includes an adapter interface 3400 for releasably attaching the visor arm 3206 to an assembly interface 2320 of an adapter 2300. The visor 3150 may include a second visor arm for attaching to a second adaptor 2300, for example a second adapter disposed on an opposing side of the helmet shell 105.

### 6.1.8 Visor Mount and Visor Assembly

Referring to Fig. 1, an example embodiment of a helmet system 103 includes a helmet shell 105 with at least one rail 2000 attached to a side surface 114 of the helmet shell and a shroud 1000 for attaching an accessory or accessory mount. The helmet system 103 includes a visor mount 4100 attached to the helmet and a visor assembly 4200 attached to the visor mount. The visor mount 4100 may be wholly or partially attached to the helmet shell 105. In some embodiments, an optional visor strap 4250 may be attached to the visor assembly 4200 at a proximal end of the visor strap 4250 and attached to another portion of the helmet system at a distal end of the visor strap 4250. In some embodiments, the distal end of the visor strap 4250 includes a strap attachment member 4252 and is removably attachable to a strap interface 2150 of the rail 2000.

### 6.1.8.1 Visor Mount

Referring now to Figs. 30A through 36B, an example embodiment of the visor mount 4100 includes a visor mounting rail 4130, also referred to herein as a visor rail 4130, for attaching the visor assembly 4200 to the visor mount. In embodiments, the visor rail 4130 may be formed as a dovetail-shaped rail although the shape of the visor rail 4130 is not so limited. Any known rail shape suitable for attaching an object with an interface for attaching to the rail is suitable for the visor rail 4130. When the visor mount 4100 is attached to the helmet shell 105, the visor rail 4130 is disposed below a front central portion of the helmet rim 108. The visor mount 4100 includes a rim channel 4122 that is configured to fit over the helmet rim 108, as may be seen for example in Figs. 31A, 31B, 34, and 35A through 36B.

The visor mount 4100 includes an outer surface member 4140 that extends over a portion of an outer surface of the helmet shell 105. The visor mount 4100 includes a first member 4160 that includes an inner surface portion 4150 that extends along an inner surface 115 of the helmet shell 105. The first member 4160 includes a rim spanning portion 4120 attached to and extending from the inner surface portion. The outer surface member 4140 is attached to the rim spanning portion 4120. The rim spanning portion 4120 extends across the helmet rim 108, between the outer surface member 4140 and the inner surface portion 4150, when the visor mount 4100 is assembled onto the helmet shell 105. The rim channel 4122 is bounded by the outer surface portion 4140, the rim spanning portion 4120, and the inner surface portion 4150. The visor rail 4130 is disposed on the rim spanning portion 4120 and extends between the outer surface member 4140 and the inner surface portion 4150.

Referring now to Figs. 35A through 35B, in some embodiments, the outer surface member 4140 is slidably attached to the first member 4160. The outer surface member 4140 may be translated relative to the inner surface portion 4150 of the first member 4160 to increase or decrease a width of the rim channel 4122. This is advantageous in that it enables the visor mount 4100 to be adapted to fit multiple helmet shells, each having a different thickness.

The outer surface member 4140 includes one or more, for example two, protrusions 4145 extending from a bottom surface 4143 of the outer surface member for attaching the outer surface member to the first member. The first member 4160 includes one or more, for example two channels 4164, disposed on and extending into a top surface 4123 of the rim spanning portion 4120. The one or more channels 4164 each are configured to receive a protrusion 4145 of the outer surface member 4140 to assemble the outer surface member onto the first member 4160 and to enable the outer surface member 4140 to translate relative to the inner surface portion 4150.

In an embodiment, each protrusion 4145 includes a threaded insert and the first member 4160 includes one or more fasteners, for example one or more threaded fasteners 4162, each for interfacing with a protrusion to attach the outer surface member 4140 to the first member 4160. As may be seen, for example, in Fig. 36A and 36B, fasteners 4162 may be assembled through fastener opening 4163 of the first member 4100 to interface with protrusions 4145 disposed in channels 4164 of the first member 4100. In an embodiment, the one or more fasteners 4162 may be actuated to slide the outer surface member relative to the first member 4160, for example to increase or decrease a width of the rim channel 4122. The fasteners 4162 may be disengaged from the outer surface member 4140 to enable removal of the outer surface member 4140 from the first member 4160 (see Figs. 36A and 36B).

The outer surface member 4140 of the visor mount 4100 is disposed on an outer surface, e.g. 110, of the helmet shell 105. In some embodiments, the outer surface member 4140 includes a shroud interface protrusion 4142 for securing the visor mount 4100 to a shroud 1001 that is attached to the helmet shell 105. The shroud 1001 may be substantially similar to shroud 1000 shown, for example, in Fig. 1.

Referring, for example to Figs. 31A and 32 through 34, the visor mount 4100 may be assembled onto the helmet shell 105 and a shroud, e.g., 1001 or 1000, may be attached to the helmet shell 105, over at least a portion of the outer surface portion 4140 to partially secure the visor mount 4100. The outer surface portion 4140 may be partially enclosed by the shroud 1001 and may extend from the shroud through a visor mount opening 1274 disposed on a bottom wall 1276 of the shroud 1001. The shroud interface protrusion 4142 is configured and disposed to interface with shroud protrusion receptacle 1020 of the shroud 1001 and may contact a plate portion 1400 or 1401 of the shroud, as seen, for example, in Figs. 33 and 34.

In some embodiments, the visor mount 4100 may include one or more visor mount electrical contacts 4144 (see Fig. 35A) which may interface with corresponding shroud electrical contacts 1475 disposed, for example, on helmet facing surface 1453 of a plate portion 1401 of the shroud 1001 (see Figs. 33 and 34). When the shroud 1001 is assembled over the visor mount 4100, the shroud electrical contacts 1475 are electrically connected with the visor mount electrical contacts 4144 to enable exchange of power and/or communication between the shroud 1001 and the visor mount 4100, and in some embodiments with an accessory attached to the visor mount.

Referring to Figs. 33, 34 and 47, the shroud 1001 includes the plate 1401 mounted on the frame 1205. The plate 1401 includes a helmet facing surface 1453 on which plate input electrical contacts 1480 are disposed. The plate 1401 includes a hook portion 1470 with a helmet facing surface 1473 upon which shroud electrical contacts 1475 are disposed. The visor mount 4100 includes visor mount electrical contacts 4144 (see Fig. 35A). The plate input electrical contacts 1480 may be electrically connected with helmet mounted electrical contacts 174 to exchange power and/or communication signals therebetween, which in turn are exchanged between the plate 1401 and the visor mount 4100 through electrically connected shroud electrical contacts 1475 and visor mount electrical contacts 4144.

Referring now to Figs. 31A, 34, and 35A through 36B, in one or more embodiments of the visor mount 4100, the inner surface portion 4150 includes a first fastener interface 4152 for securing the inner surface portion 4150 to the inner surface 115 of the helmet shell 105 with a fastener 1600 and nut 1605. The first fastener interface 4152 may include an elongated channel with an open end disposed on a distal end of the inner surface portion 4150, i.e. on an end of the inner surface portion 4150 that is located furthest from the rim spanning portion 4120. As may best be seen in Figs. 31A and 34, a fastener 1600 may be disposed within the fastener interface 4152 and a nut 1605 or the like may cooperate with the fastener 1600 to secure the inner surface portion 4150. In some embodiments, the inner surface portion 4150 includes a second fastener interface 4153 for attaching the inner portion 4150 to a bolt or other feature located in a different location as compared to fastener 1600. This is useful for attaching the visor mount 4100 to different types of helmets, for example to a helmet that includes a shroud attached to with a single fastener. Alternative embodiments of a visor mount 4100 may not include a fastener interface on the inner surface portion 4150 or may be secured on the inside of the helmet shell 105 without interfacing with a fastener or the like. In an example, not shown, a helmet system 103 includes an inner liner disposed interior to the helmet shell 105 and the inner surface portion 4150 is disposed and held in place between the inner liner and the helmet shell 105.

Referring now to Figs. 36A through 41, some alternative embodiments of a visor mount are shown. As shown, for example, in Figs. 36A and 36B, a first outer surface portion, for example outer surface portion 4140, of a visor mount, for example visor mount 4100, may be removed from the first member 4160 by disengaging the fasteners 4162 from the protrusions 4145 of the outer surface portion and disengaging the protrusions 4145 from the channels 4164.

A first outer surface member, for example 4140, may be removed from the first member 4160 and replaced with a second outer surface member having a different configuration, thereby enabling a different configuration of a helmet mount to be assembled. Referring to Figs. 37 and 38, a second outer surface member 4141 or a third outer surface member 4146 may each include one or more protrusions 4145 to enable each of them to be separately assembled onto the first member 4160 to form an embodiment of a visor mount.

In a first example, referring to Figs. 36A, 36B, 37, and 40, the second outer surface member 4141 may be assembled onto the first member 4160 to form a second visor mount 4101. The second outer surface member 4141 may include a protrusion 4151. The second visor mount 4101 may be assembled onto an embodiment of a helmet system 104 having a one-hole shroud 1002 attached thereto, for example a shroud that is attached to the helmet shell 105 using a single fastener 1601. The protrusion 4151 may interface with the one-hole shroud 1002 and the single fastener 1601 may interface with the second fastener opening 4153 of the inner surface portion 4150 of the first member 4160.

In a second example, referring to Figs. 36A, 36B, 38, and 41, the third outer surface member 4146 may be assembled onto the first member 4160 to form a third visor mount 4102. The third visor mount 4102 may be compatible with a helmet system 106 that does not include a shroud. The third outer surface member 4146 includes a substantially flat surface member 4147 with an outer surface 4148 and a helmet facing surface 4149 opposing the outer surface 4148. When the third visor mount 4102 is attached to a helmet, the helmet facing surface 4149 may conform to the outer surface of the helmet to aid in stabilizing the third visor mount on the helmet system 106.

In some embodiments, an adhesive, for example a double sided adhesive material 4154 may be disposed between the surface member 4147 and the helmet to aid in retaining the third visor mount on the helmet shell 105. In other embodiments, the third visor mount 4102 may be mounted on a helmet system that includes a three-hole shroud, e.g., shroud 1000 or 1001, or another type of shroud, for example a one-hole shroud 1002, with the surface member 4147 and a helmet shell 105 to which the shroud is attached.

Referring to Fig. 39, in another example, a fourth embodiment of visor mount 4103 includes an outer surface portion 4170 configured to be disposed over a portion of an outer surface of a helmet shell and a rim spanning portion configured to extend at least partially across a rim of the helmet shell. The fourth visor mount 4103 does not include an inner surface portion 4150 but instead is configured to be attached to a helmet shell via one or more fasteners that may be attachable to fastener openings 4175 on a helmet facing surface 4172 of the outer surface portion 4170. The fourth visor mount includes a visor rail 4130 with rail extensions 4136. Although not shown, it is understood that the fourth visor mount also includes a locating receptacle with locating protrusions, as described herein in relation to visor mount 4100.

Referring now to Figs. 30A, 31A, 31B, 35A, and 35B, the visor rail 4130 of the first member 4160 includes two rail extensions 4136, each extending outward from a vertical axis 4110 of the visor mount 4100 on opposing sides of the visor mount. The visor mount 4100 includes a locating interface 4138 formed as a channel on a bottom surface 4134 of the visor rail 4130 (see Fig. 31B). The locating interface 4138 is disposed between the rail extensions 4136. The locating interface 4138 includes a two sets of locating tooth receptacles 4139, each set of locating tooth receptacle formed as linear array along an inner wall of the locating interface 4138 and including a plurality of receptacles 4139 that extend from the inner wall outward towards a corresponding rail extension 4136, i.e. away from the vertical axis 4110 (see, for example Fig. 31B, 44A, and 44B).

### 6.1.8.2 Visor Assembly and Visor Assembly Attached to Visor Mount

Referring now to Figs. 30A, 30B, and 42A through 45B, a visor assembly 4200 includes an engagement body 4300 for removably attaching the visor assembly 4200 to the visor mount 4100 and for positioning the visor assembly 4200 relative to a user's face.

As shown in Figs. 42A and 42B, the visor assembly 4200 includes a visor lens 4210 attached to the engagement body 4300. The visor assembly 4200 may also include a gasket 4220 disposed on outer edges of the visor lens 4210, as well as a nosepiece 4230 that may be formed separately from the gasket 4220 and assembled onto the visor lens 4210. In embodiments, one or both of the gasket 4220 and nosepiece 4230 are removable from the visor lens 4210 and may be removed and replaced as needed or desired. For example, a first embodiment of a gasket 4220 can be replaced with a second embodiment of a gasket. In an embodiment, the nose piece 4230 at least partially holds the gasket 4220 on the visor lens 4210, for example with a nosepiece protrusion 4232 that extends through an opening 4222 in the gasket 4220 to secure the gasket when the gasket and nosepiece are assembled onto the lens 4210.

As may be seen, for example, in Fig. 30B, the engagement body 4300 includes a slide-on interface 4330 for removably attaching the engagement body 4300 to the visor mount 4100. The slide-on interface 4300 includes a groove 4332 formed on a top surface 4320 of the engagement body 4300 and extending across a width of the engagement body 4300 between a front surface 4315 and a rear surface 4317 of the engagement body 4300. The groove 4332 includes a pair of rail extension receptacles 4334 for receiving and interfacing with corresponding rail extensions 4136 of the visor rail 4130 of the visor mount 4100. The rail extension receptacles 4334 are disposed on opposing sides of the groove 4332 and extend outward, e.g. away from the central axis 4310.

The engagement body 4300 includes two engagement actuators 4362 engaging (i.e. to fix a position of the engagement body 4300 along the visor rail 4130) and disengaging (i.e. enabling motion of the engagement body relative to the visor rail) the engagement body 4300 relative to the visor mount 4100, for example, to fix a position of the engagement body 4300 along the visor rail 4130 (when engaged) or to enable motion of the engagement body relative to the visor rail (when disengaged). The engagement actuators 4362 are disposed on opposing lateral sides 4303 and 4304 of the engagement body 4300. A user may operate the engagement actuators 4332, as shown for example in Figs. 44A through 44C, to release a locating engagement between the engagement body 4300 and the visor mount 4100 to enable motion of the engagement body relative to the visor mount, as shown, for example, in Figs. 45A and 45B.

Referring to Figs. 31B and 44A through 44C, the engagement body 4300 includes two actuator bodies 4360. Each actuator body 4360 includes an engagement actuator 4362 and a plurality, for example two, locating teeth 4364. Alternative embodiments of an actuator body 4300 may include one locating tooth 4364 or three or more locating teeth, for example 3, 4, or 5 locating teeth.

The top surface 4320 of the groove 4332 includes a locating tooth opening 4342 for assembling the locating teeth 4364 through the top surface 4320 and disposing the locating teeth 4364 in a central portion of the slide-on interface 4330, e.g. between the pair of opposing rail extension receptacles 4334, and proximate to the central axis 4310.

The engagement body 4300 includes two or more compression members, e.g. four engagement springs 4350, two each for urging an engagement actuator 4362 into a locked configuration. As shown, for example, in Fig. 44B and 44C each engagement spring 4350 is disposed to urge a corresponding engagement actuator 4360 and associated locating teeth 4364 laterally outward, i.e. away from the central axis 4310 of the engagement body 4300.

Referring once again to Figs. 30A through 31B, 44A through 44C, the slide-on interface 4330 of the engagement body 4300 is for attaching the engagement body 4300 to the visor mount 4100. As seen, for example, in Figs. 30A, 31A, and 43, the engagement body 4300 may be assembled onto the visor mount 4100 by disposing the visor rail 4130 within the groove 4332 of the slide-on interface 4330. The rail extensions 4136 of the visor rail 4130 are disposed within corresponding rail extension receptacles 4334 of the slide on interface 4330.

Referring now to Figs. 45A and 45B, the engagement body 4300, and the visor assembly 4200 as a whole, may slide relative to the visor mount 4100 to adjust a position of the visor lens 4210 relative to a user's face. In a particular example embodiment, the engagement body 4300, and attached visor 4210, may travel forward and backward relative to the visor mount 4100 with a range of 18mm, as indicated by arrows 30 and 31 in Figs. 45A and 45B. In other embodiments, the range of travel of the engagement body 4300 relative to the visor mount 4100 may be greater or less than 18mm, for example from 10mm to 26mm, or from 14mm to 20mm. The adjustable position feature of the visor assembly 4200 relative to the visor mount 4100 provides a number of advantages. For example, a user can position the visor assembly 4200 so that it does not interfere with a night vision device (NVD), which may be attached to the helmet system 103 via the shroud 1000 or 1001. The user can select a position of the visor assembly 4200 that corresponds to a position of a first NVD and can change the position of the visor assembly 4200 to accommodate a second NVD or to otherwise position the visor assembly 4200 in a desired position.

Referring once again to Figs. 30A through 31B, 42A through 44C, the slide-on interface 4330 of the engagement body 4300 includes two sets of locating teeth 4364 disposed near a central portion of the groove 4332, i.e. proximal to the central axis 4310, between the rail extension receptacles 4334 and extending toward the rail extension receptacles. When the engagement body 4300 is assembled onto the visor mount 4100, the locating teeth 4364 may be disposed within the locating interface 4138. Each locating tooth 4364 may engage with a corresponding locating tooth receptacle 4139 formed in a side wall of the locating interface 4138 to hold the engagement body 4300 in a particular position relative to the visor mount 4100, for example to hold a front surface 4315 of the engagement body 4300 at a particular distance from the front surface 4132 of the visor rail 4130.

As may be seen, for example, in Figs. 44B and 44C, each actuator body 4360 has a locked configuration, in which the locating teeth 4364 of the actuator body 4360 are maintained within corresponding locating tooth receptacles 4139. The engagement springs 4350 are disposed to provide an urging force on each actuator body 4360 to maintain the actuator body in a locked configuration. When the actuator body 4360 is in the locked configuration, at least one locating tooth 4364 is disposed in a corresponding locating tooth receptacle 4139 to maintain the engagement body 4300 in a particular position. The urging force tends to urge the locating teeth 4364 into visor mount locating tooth receptacles 4139 corresponding to an instantaneous position of the engagement body 4300 along the visor rail 4130 and to maintain each actuator body 4360 in the locked configuration.

A user can release the two actuator bodies 4360 from their locked configurations by pressing inward on the two engagement actuators 4362, as indicated by arrows 43 and 45 in Fig. 44B. When the user pushes on the engagement actuators 4362 with enough force to overcome the urging force provided by the engagement springs 4350, the actuator bodies 4360 move from the locked configuration to an unlocked configuration, wherein the locating teeth 4364 are moved towards the central axis 4310 of the engagement body (see Figs. 44B and 44C, for example) and out of contact with the locating tooth receptacles 4139 of the visor mount 4100. With the actuator bodies 4360 in the unlocked configuration, the engagement body 4300 can translate relative to the visor mount 4100 to reposition the visor assembly 4200 or remove the visor assembly 4200 from the visor mount 4100.

A user can attach the visor assembly 4200 onto the visor mount 4100. The user presses inward on the engagement actuators 4362, assembles the slide-on interface 4330 of the engagement body 4300 onto the visor rail 4130 of the visor mount 4100, slides the engagement body 4300 along the visor rail 4130 until the visor lens 4210 is in a selected position, e.g. a particular distance from the user's face, and releases the engagement actuators 4362. When the engagement actuators 4362 are released, the engagement springs 4350 urge the locating teeth 4364 into corresponding locating teeth receptacles 4139 of the locating interface 4138 to secure the visor 4210 in the desired position.

### 6.1.8.3 Visor Lock

Referring now to Figs. 46A through 46C, in an embodiment, a second embodiment of a second engagement body 4302 includes a visor lock actuator 4372 for preventing motion of the engagement actuators 4362 to lock the second engagement body 4302 onto the visor mount 4100. A user may operate the visor lock actuator 4372, as shown, for example in Fig. 46A and indicated by arrow 97, to lock the second engagement body 4302, as shown in Fig. 46C, when the user is engaged in certain activities, for example during jump missions or other activities wherein there is an increased chance of the visor assembly 4100 being subjected to forces which may tend to dislodge it from the visor mount 4100.

The second engagement body 4302 includes a visor lock body 4370. The visor lock body 4370 includes a visor lock actuator 4372 and a visor lock 4374. The visor lock 4374 is formed as a wedge-shaped extension of the visor lock body 4370. The visor lock 4374 includes two visor lock protrusions (not shown), each disposed on an opposing lateral face of the visor lock 4374. Each actuator body 4360 includes a visor lock interface 4366 for receiving a visor lock protrusion of the visor lock body 4374.

The visor lock body 4370 is rotatably coupled to the second engagement body 4302 to enable movement of the visor lock 4374 between an engaged configuration as shown in Fig. 46C and a disengaged configuration, as shown in Fig. 46B. When the visor lock 4374 is in the disengaged position, the locating teeth 4364 can translate toward the central axis 4310 of the second engagement body 4302. Referring to Fig. 46C, when in the engaged configuration, the visor lock 4374 is disposed between the actuator bodies 4360 and thereby prevents them from translating towards the central axis 4310 thereby fixing the visor assembly 4200 in place on the visor rail 4130. When the visor lock actuator 4372 is in the engaged configuration, the visor lock protrusions of the visor lock body 4370 may be engaged with the visor lock interfaces 4366 of the actuator bodies 4360 to hold the visor lock body 4370 in the engaged configuration. A user may operate the visor lock actuator 4372 to disengage the visor lock.

The visor lock 4374 provides a second, e.g. backup or augmented, locking or securing mechanism for locking the visor assembly 4200 on the visor mount 4100, e.g. for fixing a position of the second engagement body 4302 relative to the visor rail 4130. A user may choose to engage the visor lock 4374 when performing activities that could cause high levels of force to be applied to the visor assembly 4200, for example while performing jump operations.

Referring to Fig. 47, an embodiment of the helmet system 103 is shown in side schematic view. Referring to Fig. 33, 34, and 35A, the helmet system 103 may include an embodiment of a shroud 1001. The shroud 1001 includes the frame 1205 with the plate 1401 mounted on the frame. The shroud 1001 includes one or more electrical contacts for providing power to and/or exchanging communication signals with a visor mount 4100 and therethrough with a visor accessory device 4215 of a visor assembly 4200.

Embodiments of the helmet system 103 include one or more rails 2000 and a remote compute module (RCM) 2610 which may be disposed on a rear surface 112 of the helmet shell 105 and attached to the one or more rails with an attachment arm 2620 that includes a rail interface element 2622 disposed at a distal end of the attachment arm for connecting to the rail 2000. The RCM 2610 includes one or more of a processor 171, associated memory 172, and a power source 173, for example including one or more batteries. In at least one embodiment, a power pack 175 including one or more removable power sources 176, for example one or more batteries, may be removably attached to the RCM 2610 to provide power to the RCM from the one or more removable power sources 176.

The helmet system 103 includes a visor mount 4100 and a shroud 1001 disposed on a front surface 110 of the helmet shell 105. The shroud 1001 may enclose a portion of the visor mount that includes one or more electrical contacts 4144 for interfacing with corresponding electrical contacts 1475 of the shroud 1001.

The visor assembly 4200 includes an engagement body 4300 attaching the visor assembly to the visor mount 4100 and a visor lens 4210 configured to be disposed in front of a user's eyes when the user wears the helmet system 103. The accessory device 4215 may be disposed between the visor lens and the user's face. Example embodiments of the accessory device include a heads up display (HUD) device for display information to the user, for example via a screen or projector of the HUD. When the visor assembly 4200 is attached to the visor mount 4100, the accessory device 4215 may be electrically connected to the electrical interface 4144 of the visor mount through one or more electrical conductors and electrical interfaces of the visor mount 4100 and the visor assembly 4200, for example one or more electrical conductors and electrical interfaces of the engagement body 4300.

The visor mount electrical interface 4144 may be electrically connected to a shroud electrical interface 1475, which in turn may be electrically connected to a shroud input electrical interface 1480. The shroud input electrical interface may be electrically connected to a helmet mounted electrical interface 174. A cable 2616 extends between the RCM 2610 and the helmet mounted electrical interface 174 for exchanging power and/or data signals therebetween and with the visor accessory device 4215 through the electrical conductors and electrical interfaces of the shroud 1001, visor mount 4100, and visor assembly 4200. The RCM 2610 may be operable to send and/or receive communication signals to and from the accessory device 4215, for example to send information for display on a viewing screen of the accessory device. The RCM 2610 may be operable to provide, to the accessory device 4215, power from one or more of the power source 173 and the removable power pack 175.

The cable 2616 may pass between the RCM 2610 and the helmet mounted electrical interface through the cable routing channel 2200, which is disposed between the rail 2000 and the helmet shell, as indicated by dashed lines in Fig. 47. he cable 2616 extends from the RCM 2610 to the rear cable opening 2204 through and outer surface of the rail and into the cable routing channel 2200. The cable 2616 extends upwards from the rear cable opening 2204 and through the cable routing channel 2200 to the front cable opening 2202. The cable 2616 extends from the front cable opening 2202 to the helmet mounted electrical interface 174 and is electrically connected to the helmet mounted electrical interface 174.

In an alternative configuration, the cable 2616 may pass through the cable clip 2400 instead of passing through the cable routing channel 2200.

It will also be recognized by those skilled in the art that, while the invention has been described above in terms of preferred embodiments, it is not limited thereto. Various features and aspects of the above-described invention may be used individually or jointly. Further, although the invention has been described in the context of its implementation in a particular environment, and for particular applications (e.g. a helmet system that may be used by warfighters), those skilled in the art will recognize that its usefulness is not limited thereto and that the present invention can be beneficially utilized in any number of environments and implementations where it is desirable to attach accessory devices and cables to headgear, for example for first responder and other helmets and headgear to which one or more accessory devices may be attached. Accordingly, the claims set forth below should be construed in view of the full breadth and spirit of the invention as disclosed herein.

## Claims

1. A helmet system comprising:
a helmet shell;
a mount for attaching an object to the helmet system, the mount disposed on an outer surface of the helmet shell; and
a flexible member assembly removably attachable to the mount, the flexible member assembly comprising:
a flexible member; and
a coupling member attached to a first end of the flexible member for releasably attaching the flexible member assembly to the mount, wherein:
the mount comprises an interface for removably attaching the flexible member to the mount, the interface comprising:
an assembly portion for receiving the coupling member and for removing the coupling member from the interface; and
a lock portion for securing the coupling member to the mount.

2. The helmet system of claim 1, wherein:
the coupling member is removable from the mount while disposed in the assembly portion;
releasably attaching the flexible member assembly to the mount comprises translating the coupling member from the assembly portion to the lock portion;
the coupling member is coupled to the mount while disposed in the lock portion; and
removing the coupling member from the mount comprises translating the coupling member from the lock portion to the assembly portion.

3. The helmet system of claim 1, the flexible member assembly comprising a second coupling member attached to a second end of the flexible member, wherein the mount comprises a second interface for removably attaching the second coupling member to the mount.

4. The helmet system of claim 1, wherein the coupling member further comprises a snap lock feature for attaching the coupling member to the lock portion with tactile feedback.

5. The helmet system of claim 1, wherein a top surface of the coupling member is flush with an outer surface of the mount when the coupling member is disposed in the lock portion.

6. The helmet system of claim 1, wherein tension applied to the flexible member seats the coupling member in the lock portion.

7. The helmet system of claim 1, wherein the mount comprises a shroud for attaching the object to the helmet shell and the flexible member assembly is connectable to the object for supporting the object.

8. The helmet system of claim 1, wherein the mount comprises a rail, the rail for attaching a first object to the helmet system, further comprising:
an adapter disposed over a portion of the rail, the adapter comprising an interface for attaching a second object to the helmet system,
the second object comprising a hook for rotatably engaging the interface and a lock for releasable coupling the second object to the adapter, wherein
the second object is removable from the helmet system by operating an actuator to release the lock.

9. The helmet system of claim 1, wherein the second object is removable from the helmet system by applying a force greater than a threshold amount to the object to pull the object from the helmet system.

10. The helmet system of claim 1, further comprising:
a visor mount attachable to the helmet shell, the visor mount comprising a rail configured to be disposed beneath a front rim of the helmet shell when the visor mount is attached to the helmet shell; and
a visor assembly attachable to the visor mount, the visor assembly comprising an engagement body for releasably fixing the visor assembly to the rail, wherein:
the rail comprises a locating interface formed on a bottom surface of the rail, the locating interface comprising one or more locating tooth receptacles; and
the engagement body comprises one or more locating teeth for engaging with the one or more locating tooth receptacles to fix the engagement body in a position along the rail and for disengaging from the one or more locating receptacles to enable sliding of the engagement body along the rail.

11. A flexible member assembly attachable to an object comprising a helmet system, the flexible member assembly comprising:
a flexible member; and
a coupling member attached to a first end of the flexible member for releasably attaching the flexible member assembly to the object, wherein
the coupling member is configured to be releasably coupled to an interface disposed on the object, the interface comprising:
an assembly portion for receiving the coupling member and for removing the coupling member from the interface; and
a lock portion for securing the coupling member to the object.

12. The flexible member assembly of claim 11, wherein the object comprises a mount for attaching a second object to a helmet shell.

13. The flexible member assembly of claim 11, wherein the object comprises eyewear.

14. The flexible member assembly of claim 11, wherein the object comprises a helmet shell.

15. The flexible member assembly of claim 11, wherein a second end of the flexible member is attached to an eye protection object.
